# EUROPEAN PATENT SPECIFICATION

(11) **EP 3 377 778 B1**
(45) Date of publication and mention of the grant of the patent: **01.04.2020**
(21) Application number: 16867144.4
(22) Date of filing: 17.11.2016
(51) Int. Cl.: F16B 45/02, F16B 45/04, F16B 45/06

(54) **MANUALLY ACTUATABLE HANGER FOR SUSPENDING ARTICLES FROM A TUBULAR CARRIER STRUCTURE**
MANUELL BETÄTIGBARER AUFHÄNGER ZUM AUFHÄNGEN VON GEGENSTÄNDEN AN EINER ROHRFÖRMIGEN TRÄGERSTRUKTUR
CINTRE À ACTIONNEMENT MANUEL POUR SUSPENSION D'ARTICLES DEPUIS UNE STRUCTURE SUPPORT TUBULAIRE

(30) Priority: 17.11.2015 US 201514943414
(43) Date of publication of application: 26.09.2018
(73) Proprietor: Four Strong Corporation, Chapel Hill, North Carolina 27516 (US)
(72) Inventor: ABELS, David, Chapel Hill, North Carolina 27516 (US); WIMBERLY, Graham, Charleston, South Carolina 29407-4236 (US); DJURDJEVIC, Boban, 21300 Beocin (RS); ABELS, Hannah, Chapel Hill, North Carolina 27516 (US); TAL, Gilad, 12245 Upper Galilee (IL)
(74) Representative: Dehns
(86) International application number: PCT/US2016/062550
(87) International publication number: WO 2017/087683

(56) References cited:
- DE-C- 319 683
- US-A- 1 382 849
- US-A- 3 083 431
- US-A1- 2005 144 730
- US-A1- 2011 138 587

## Description

### STATEMENT OF RELATED APPLICATION(S)

This application claims the benefit of U.S. Patent Application No. 14/943,414 filed November 17, 2015.

### TECHNICAL FIELD

The present disclosure relates to hangers suitable for suspending articles from tubular or cylindrical carrier structures, and more particularly to a manually actuatable hanger that is arranged to grip a carrier structure and that includes an articulated gate element that may be opened and closed to provide secure access to an interior surface of a hook portion.

### BACKGROUND

Carabiners have long been used in climbing (e.g., for hanging from ropes and for holding ropes), and their functionality has expanded to other areas such as holding keys, restraining a dog on a leash, and holding various loop-handled items (such as purses, shopping bags, diaper bags, etc.) from a cylindrical handle of a mobile vehicle such as a baby stroller or a shopping cart. However, a carabiner has the tendency to slip from side to side on such a handle, due to the weight of the article suspended from the carabiner and/or due to momentum (e.g., swinging) of the suspended article. As disclosed in U.S. Patent Application Publication No. 2009/0183347 A1 to Abels, addition of anti-slip materials such as a foam rubber sleeve to at least an apex portion of a carabiner may reduce slippage of a carabiner attached to a cylindrical handle, thereby reducing the likelihood that a suspended article may slip and possibly damage the article, impact a child seated in a stroller or shopping cart, or impact a person using the mobile vehicle. However, the slip resistance of even a sleeved carabiner from which weighty articles are suspended may be limited when a cylindrical handle of a mobile vehicle (such as a baby stroller) is not horizontally oriented, when a mobile vehicle is jostled (e.g., over bumps in pavement), or when a mobile vehicle is oriented in a non-horizontal position (e.g., directed over an angled surface). Accordingly, a need exists for improved hangers suitable for suspending articles from tubular or cylindrical carrier structures of various orientations and/or in various situations.

### SUMMARY

The invention is defined by a manually actuatable hanger according to claim 1 and a method according to claim 15. Preferred embodiments are set out in the dependent claims.

Disclosed herein is a manually actuatable hanger suitable for suspending one or more articles from a cylindrical or tubular carrier structure (e.g., of a mobile vehicle), wherein jaws of the hanger may be actuated to expand a jaw opening to receive the carrier structure, and the jaws are biased (e.g., with a torsion spring) toward a closed position to engage the carrier structure. The hanger further includes a pivoting gate element that is operable by a user to selectively open a gate opening to provide access to a hook portion, whereby one or more articles may be hung from an interior surface of the hook portion. Such a hanger is easily adjustable, affirmatively resists slipping when the jaws engage a carrier stricture, and is suitable for use with various different types, sizes, and configurations of cylindrical or tubular carrier structures to provide security and safety for a user seeking to hang one or more articles from a carrier structure. It is also possible to use the hanger on carriers that are non-rounded or provided with irregular or non-uniform cross-sectional shapes.

In one aspect, the disclosure relates to a manually actuatable hanger including a main body, a rocker element, a first biasing element, and a pivoting gate element. The main body includes a first body end, a second body end, a first jaw portion proximate to the first body end, a hook portion proximate to the second body end, and a first pivot region between the first jaw portion and the hook portion. The rocker element includes a first rocker end, a second rocker end, a second jaw portion proximate to the first rocker end, a manually depressible tab portion proximate to the second rocker end, and a second pivot region arranged between the second jaw portion and the depressible tab portion, wherein the second pivot region is registered with the first pivot region and permits the rocker element to pivot relative to the main body. The first biasing element is configured to exert a rotational force between the main body and the rocker element, and is configured to resist expansion of a jaw opening between the first jaw portion and the second jaw portion. The second jaw portion is configured to be pivoted away from the first jaw portion to expand the jaw opening when the depressible tab portion is pressed by a user toward the hook portion. A gate opening is provided between the depressible tab portion and the second body end. The pivoting gate element extends between the depressible tab portion and the second body end, and is operable by the user to selectively open the gate opening to provide access to the hook portion, whereby one or more articles may be hung from an interior surface of the hook portion.

In certain embodiments, a manually actuatable hanger as disclosed herein includes a pivot pin, a pivot rod, or a pivot cylinder extending through the first pivot region and the second pivot region. In certain embodiments, the pivoting gate element is pivotally linked to the rocker element proximate to the second rocker end, and is arranged to pivot inward toward the interior surface of the hook portion. In certain embodiments, the pivoting gate element is biased to resist opening of the gate opening. In certain embodiments, the pivoting gate element includes a first end received in a first aperture defined in a first side surface of the depressible tab portion, the pivoting gate element includes a second end received in a second aperture defined in a second side surface of the depressible tab portion, and the first aperture and the second aperture are axially offset from one another to cause the pivoting gate element to be biased to resist opening of the gate opening. In certain embodiments, a second biasing element is configured to bias the pivoting gate element to resist opening of the gate opening. In certain embodiments, the first jaw portion and the second jaw portion are configured to receive and to grip a cylindrical or tubular carrier structure. In certain embodiments, the first jaw portion includes a first arcuate inner gripping surface, and the second jaw portion includes a second arcuate inner gripping surface. In certain embodiments, the first arcuate inner gripping surface comprises a first arc length, the second arcuate inner gripping surface comprises a second arc length, and the second arc length is at least about twice the first arc length. In certain embodiments, a resilient material is arranged in or along the first jaw portion and the second jaw portion.

In certain embodiments, the first jaw portion comprises a first pliable gripping insert and the second jaw portion comprises a second pliable gripping insert.

In certain embodiments, the first and second pliable gripping inserts each include a base portion and a rib portion; for each of the first and the second pliable gripping inserts, the rib portion extends radially inward relative to the base portion; and for each of the first and the second pliable gripping inserts, the base portion comprises a first thickness in a direction parallel to a central axis extending through the jaw opening, the rib portion comprises a second thickness in the direction parallel to the central axis extending through the jaw opening, and the second thickness is smaller than the first thickness.

In certain embodiments, at least one locking mechanism is provided at or along an interface between the first body end and the first rocker end to resist initial separation between the first body end and the first rocker end. In certain embodiments, the at least one locking mechanism comprises (i) a protrusion associated with one of the first body end or the first rocker end, and (ii) a recess associated with the other of the first body end or the first rocker end, wherein the recess is configured to receive at least a portion of the protrusion. In certain embodiments, the at least one locking mechanism comprises a first locking element positioned at or along the first body end, and comprises a second locking element positioned at or along the first rocker end, wherein the first and second locking elements are configured to contact and selectively engage one another.

In certain embodiments, a travel stop is arranged at the second body end, wherein the travel stop comprises an inwardly protruding tab arranged to protrude through a portion of the pivoting gate element when the gate opening is closed by the pivoting gate element.

In certain embodiments, a hanger includes a battery-powered flashlight element that is affixed to or integrated with one of the main body, the rocker element, or the pivoting gate element. In certain embodiments, a hanger includes a battery-powered audible alarm generating element that is affixed to or integrated with one of the main body, the rocker element, or the pivoting gate element.

In another aspect, a method for suspending one or more articles from a cylindrical or tubular carrier structure using a manually actuatable hanger as disclosed herein is provided, with the method including multiple steps. A first step includes pressing the depressible tab portion toward the hook portion to cause the second jaw portion to pivot away from the first jaw portion and expand the jaw opening. A second step includes inserting the cylindrical or tubular carrier structure into the jaw opening. A third step includes releasing pressure applied to the depressible tab portion to cause the first jaw portion and the second jaw portion to grip the cylindrical or tubular carrier structure. A fourth step includes operating the pivoting gate element to open the gate opening. A fifth step includes inserting the one or more articles through the gate opening to be hung from the interior surface of the hook portion.

In certain aspects, any of the preceding aspects or other features disclosed here may be combined for additional advantage.

Those skilled in the art will appreciate the scope of the present disclosure and realize additional aspects thereof after reading the following detailed description of the preferred embodiments in association with the accompanying drawing figures.

### BRIEF DESCRIPTION OF THE DRAWINGS

Figure 1 is a front elevation view illustration of a manually actuatable hanger for suspending articles from a cylindrical or tubular carrier structure according to a first embodiment, with jaws and a gate element both in an unactuated position.
Figure 2 is a left side elevation view illustration of the hanger of Figure 1.
Figure 3 is a rear elevation view illustration of the hanger of Figures 1 and 2.
Figure 4 is a right side elevation view illustration of the hanger of Figures 1 to 3.
Figure 5 is a top plan view illustration of the hanger of Figures 1 to 4.
Figure 6 is a bottom plan view illustration of the hanger of Figures 1 to 5.
Figure 7 is a right side cross-sectional view illustration of the hanger of Figures 1 to 6, taken along section line "A"-"A" illustrated in Figure 5.
Figure 8 is a front perspective view illustration of the hanger of Figures 1 to 7.
Figure 9 is a rear perspective view illustration of the hanger of Figures 1 to 8.
Figure 10 is a front perspective view rendering of the hanger of Figures 1 to 9.
Figure 11 is a rear perspective view rendering of the hanger of Figures 1 to 10.
Figure 12A is a right side elevation view illustration of the hanger of Figures 1 to 11, with jaws of the hanger in an actuated position to expand a jaw opening to receive a cylindrical carrier structure.
Figure 12B is a right side elevation view illustration of the hanger and cylindrical carrier structure of Figure 12A, with jaws of the hanger in an unactuated position to cause jaws of the hanger to engage the cylindrical carrier structure, and with the pivoting gate element pivoted inward toward the interior surface of the hook portion.
Figure 13 is a front elevation view illustration of a manually actuatable hanger for suspending articles from a cylindrical or tubular carrier structure according to a second embodiment, with a jaws and a gate element both in an unactuated position.
Figure 14 is a left side elevation view illustration of the hanger of Figure 13.
Figure 15 is a rear elevation view illustration of the hanger of Figures 13 and 14.
Figure 16 is a right side elevation view illustration of the hanger of Figures 13 to 15.
Figure 17 is a top plan view illustration of the hanger of Figures 13 to 16.
Figure 18 is a bottom plan view illustration of the hanger of Figures 13 to 17.
Figure 19 is a right side cross-sectional view illustration of the hanger of Figures 13 to 18, taken along section line "B"-"B" illustrated in Figure 17.
Figure 20 is a front perspective view illustration of the hanger of Figures 13 to 19.
Figure 21 is a rear perspective view illustration of the hanger of Figures 13 to 20.
Figure 22 is a front perspective view rendering of the hanger of Figures 13 to 21.
Figure 23 is a rear perspective view rendering of the hanger of Figures 13 to 22.
Figure 24A is a right side elevation view illustration of the hanger of Figures 13 to 23, with jaws of the hanger in an actuated position to expand a jaw opening to receive a cylindrical carrier structure.
Figure 24B is a right side elevation view illustration of the hanger and cylindrical carrier structure of Figure 24A, with jaws of the hanger in an unactuated position to cause jaws of the hanger to engage the cylindrical carrier structure, and with the pivoting gate element pivoted inward toward the interior surface of the hook portion.
Figure 25 is a perspective view of a manually actuatable hanger as disclosed herein affixed to a cylindrical or tubular carrier structure of a mobile vehicle such as a baby stroller or a shopping cart, with a handled article suspended from the hanger.
Figure 26 is a right side elevation view illustration of a manually actuatable hanger for suspending articles from a cylindrical or tubular carrier structure according to a third embodiment, with the hanger including an integrated flashlight.
Figure 27 is a right side elevation view illustration of a manually actuatable hanger for suspending articles from a cylindrical or tubular carrier structure according to a fourth embodiment, with the hanger including an audible alarm generating element.
Figure 28A is a front perspective view illustration of a manually actuatable hanger for suspending articles from a cylindrical or tubular carrier structure according to a fifth embodiment, with jaws and a gate element both in an unactuated position.
Figure 28B is another front perspective view illustration of the hanger of Figure 28A.
Figure 29 is a left side elevation view illustration of the hanger of Figures 28A and 28B.
Figure 30 is a right side elevation view illustration of the hanger of Figures 28A-29.
Figure 31 is a rear elevation view illustration of the hanger of Figures 28A-30.
Figure 32 is a front elevation view illustration of the hanger of Figures 28A-31.
Figure 33 is a top plan view illustration of the hanger of Figures 28A-32.
Figure 34 is a bottom plan view illustration of the hanger of Figures 28A-33.
Figure 35A is a left side elevation view illustration of the hanger of Figures 28A-34, with the jaws in an first actuated position and the gate element in an unactuated position.
Figure 35B is a left side elevation view illustration of the hanger of Figures 28A-35A, with the jaws in an second actuated position and the gate element in an actuated position.
Figure 36A is a front perspective view illustration of a manually actuatable hanger for suspending articles from a cylindrical or tubular carrier structure according to a sixth embodiment, with jaws and a gate element both in an unactuated position.
Figure 36B is another front perspective view illustration of the hanger of Figure 36A.
Figure 37 is a left side elevation view illustration of the hanger of Figures 36A and 36B.
Figure 38 is a right side elevation view illustration of the hanger of Figures 36A-37.
Figure 39 is a rear elevation view illustration of the hanger of Figures 36A-38.
Figure 40 is a front elevation view illustration of the hanger of Figures 36A-39.
Figure 41 is a top plan view illustration of the hanger of Figures 36A-40.
Figure 42 is a bottom plan view illustration of the hanger of Figures 36A-41.
Figure 43A is a left side elevation view illustration of the hanger of Figures 36A-42, with the jaws in an first actuated position and the gate element in an unactuated position.
Figure 43B is a left side elevation view illustration of the hanger of Figures 36A-43A, with the jaws in an second actuated position and the gate element in an actuated position.

### DETAILED DESCRIPTION

As noted previously, a need exists for improved hangers suitable for suspending articles from tubular or cylindrical carrier structures of various orientations and/or in various situations. Such need is satisfied by manually actuatable hangers disclosed herein. A hanger may be actuated by a user to expand a jaw opening to receive a carrier structure, with the jaws being biased toward a closed position to engage the carrier structure. In certain embodiments, the jaw portions include arcuate inner surfaces (preferably including one or more suitable resilient materials) suitable for gripping a cylindrical or tubular carrier structure. Separately from the jaw opening, the hanger further includes a pivoting gate element that is operable by a user to selectively open a gate opening to provide access to a hook portion, whereby one or more articles may be hung from an interior surface of the hook portion. At a point of use, the hanger may be oriented with the jaw opening arranged above the gate opening, with the two openings being distinct from one another and separated by a pivot pin and registered pivot regions of a main body and a rocker element, respectively. Such a hanger is easily adjustable, affirmatively resists slipping when the jaws engage a carrier structure, and is suitable for use with cylindrical or tubular carrier structures to securely hang one or more articles from a carrier structure.

In certain embodiments, a manually actuatable hanger includes a main body, a rocker element, a first biasing element, and a pivoting gate element. The main body includes a first jaw portion proximate to a first body end, a hook portion proximate to a second body end, and a first pivot region between the first jaw portion and the hook portion. The rocker element includes a second jaw portion proximate to a first rocker end, a manually depressible tab portion proximate to a second rocker end, and a second pivot region arranged between the second jaw portion and the depressible tab portion. The second pivot region is registered with the first pivot region and permits the rocker element to pivot relative to the main body. In certain embodiments, the first pivot region includes a first aperture, the second pivot region includes a second aperture, and a pivot pin, pivot rod, or pivot cylinder extends through the first pivot region and the second pivot region (e.g., like a hinge) to enable pivotal movement between the main body and the rocker element. The first biasing element (which may be embodied in a torsion spring) is configured to exert a rotational force between the main body and the rocker element, and is configured to resist expansion of a jaw opening between the first jaw portion and the second jaw portion. When a user depresses the depressible tab portion (of the rocker element) toward the hook portion, in a manner sufficient to overcome the rotational force exerted by the first biasing element, pivotal movement of the rocker element causes the second jaw portion (of the rocker element) to move away from the first jaw portion (of the main body), thereby expanding a jaw opening between the first and second jaw portions. In such an actuated position (with the jaw opening being in an expanded state), the hanger may be positioned to receive a cylindrical or tubular carrier structure in the jaw opening. Upon release of the depressible tab portion, the first biasing element causes the first and second jaw portions to move toward one another, thereby contracting the jaw opening and causing the first and second jaw portions to engage the carrier structure. In certain embodiments, a gap remains between the first body end and the first rocker end when the first and second jaw portions are in an unactuated position. Such a gap may be maintained by mating of the pivoting gate element with a latch (e.g., an inwardly protruding tab optionally including a detent) associated with a travel stop, wherein the latch is arranged to protrude through a portion of the pivoting gate element when the gate opening is closed by the pivoting gate element. In alternative embodiments, a first body end and a first rocker end may be arranged to touch one another (such that a mouth therebetween is closed) when the jaw portions are in an unactuated position.

In certain embodiments, the first jaw portion includes a first arcuate inner surface, and the second jaw portion includes a second arcuate inner surface. In certain embodiments, one or more resilient materials (e.g., rubber, silicone, silicone rubber, or the like) may be arranged along arcuate inner surfaces of the jaw portions, such as may be useful to increase friction between the jaw portions and a carrier structure, and/or to provide cushioning to prevent damage to a carrier structure (such as a baby stroller handle) that is already covered or coated with a material such as foam rubber. In certain embodiments, the arcuate inner surfaces and/or the one or more resilient materials may embody gripping surfaces. In certain embodiments, the first arcuate inner surface comprises a first arc length, the second arcuate inner surface comprises a second arc length, and the second arc length is at least about twice the first arc length

Separately from the jaw opening, the hanger further includes a pivoting gate element that is operable by a user to selectively open a gate opening to provide access to a hook portion, whereby one or more articles may be hung from an interior surface of the hook portion. In certain embodiments, the pivoting gate element comprises a metal rod or sturdy metal wire with multiple bends (e.g., four bends) arranged as part of a loop (e.g., which may be rectangular or trapezoidal shape), with the loop bounding a gap between segments of the rod or wire. In certain embodiments, the pivoting gate element is pivotally linked to the rocker element proximate to the second rocker end (e.g., along the depressible tab portion). In certain embodiments, the pivoting gate element is arranged to pivot inward toward the interior surface of the hook portion. In other embodiments, the pivoting gate element may be pivotally linked to the main body (e.g., proximate to the second body end) and/or may be arranged to pivot outward away from the interior surface of the hook portion.

In certain embodiments, the pivoting gate element is biased to resist pivotal movement, and thereby resist opening of the gate opening. In certain embodiments, a second biasing element (e.g., a torsion spring) may be configured to bias the pivoting gate element to resist opening of the gate opening. In certain embodiments, biasing of the pivoting gate element may be accomplished by providing first and second ends of a loop-type pivoting gate element that are inserted in first and second apertures defined in opposing side surfaces of the rocker element (or, alternatively, defined in the main body), with the ends of the pivoting gate element being axially offset from one another to cause the pivoting gate element to be biased to resist opening of the gate opening.

In certain embodiments, a tip portion of a pivoting gate element may be arranged to travel in an arcuate path when the pivoting gate element is actuated. In certain embodiments, a travel stop may be arranged to receive the tip portion of the pivoting gate element when the pivoting gate element is in an unactuated (e.g., closed) position. In certain embodiments, a travel stop may include a mechanical restraining element (e.g., a detent, a recess, a raised surface, or the like) and/or a magnetic restraining element (e.g., a combination of a magnet and a ferrous material) arranged to maintain the pivoting gate element in an unactuated (e.g., closed) position and thereby resist initial movement of the pivoting gate element. In certain embodiments, a travel stop incorporating mechanical and/or magnetic restraining elements may be provided together with a second biasing element arranged to resist opening of the gate opening; in other embodiments, a restraining element or a second biasing element may be provided. Through use of one or more restraining elements and/or a second biasing element, the gate opening may be maintained in a closed position unless and until the pivoting gate element is actuated (e.g., pivoted) by a user, thereby promoting secure retention of one or more articles that are hung from an interior surface of the hook portion within a containment zone that is bounded by the main body (including the hook portion), the pivoting gate element, and the rocker element.

In certain embodiments, the main body and the rocker element may be fabricated of a polymeric or composite material by a suitable method such as molding (e.g., injection molding). In other embodiments, one or more of the main body and the rocker element may be fabricated of metal by a suitable method such as by casting, stamping, machining, or the like. In certain embodiments, each of the main body and the rocker element may comprise a unitary element; in alternative embodiments, one or more of the main body and the rocker element may be composed of multiple pieces joined to one another by suitable means such as adhesives or mechanical fasteners.

In certain embodiments, the main body, the rocker element, or the pivoting gate element may include an integrated flashlight element, such as a battery-operated light emitting diode lamp including a control switch and a light emitting region. In certain embodiments, a flashlight element may be permanently affixed to the main body, the rocker element, or the pivoting gate element with adhesives or other fasteners. In certain embodiments, at least a portion of a flashlight element may be integrally molded with the main body or the rocker element. In certain embodiments, the flashlight element may be pointed in a generally downward direction to permit viewing and inspection of contents of bags or purses suspended from the hanger. In certain embodiments, a flashlight element may be integrated with the rocker element, and may be operated with a control switch (e.g., a pushbutton) located on or along the depressible tab portion.

In certain embodiments, the main body, the rocker element, or the pivoting gate element may include an integrated audible alarm generating element, such as a battery-powered alarm including a control switch (e.g., a pushbutton) and a speaker. An alarm generating element may be activated by a user in a situation when the user feels threatened, in order to draw attention to and/or summon help for the user. In certain embodiments, an alarm generating element may be permanently affixed to the main body, the rocker element, or the pivoting gate element with adhesives or other fasteners. In certain embodiments, at least a portion of an alarm generating element may be integrally molded with the main body or the rocker element.

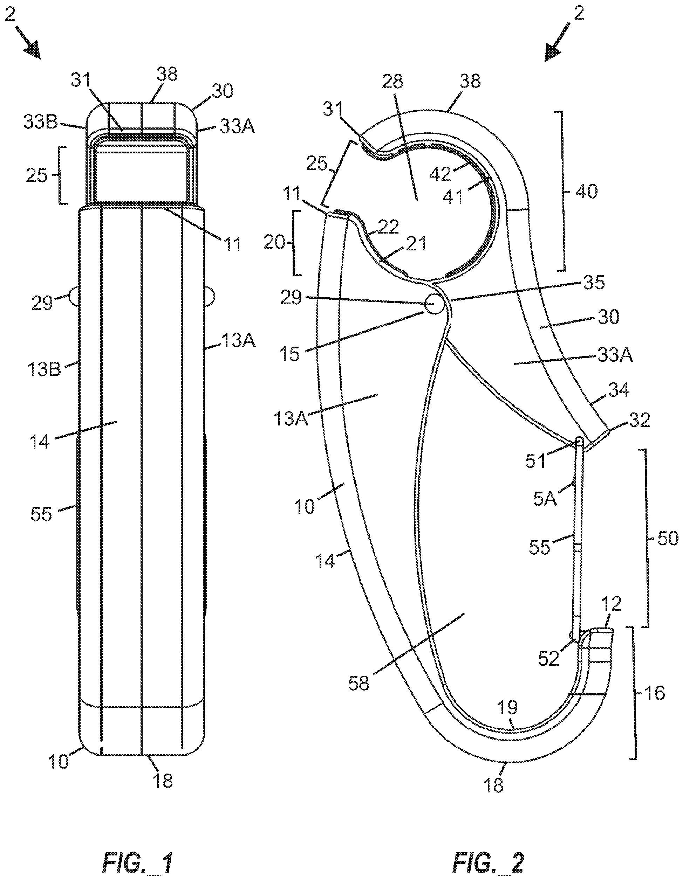

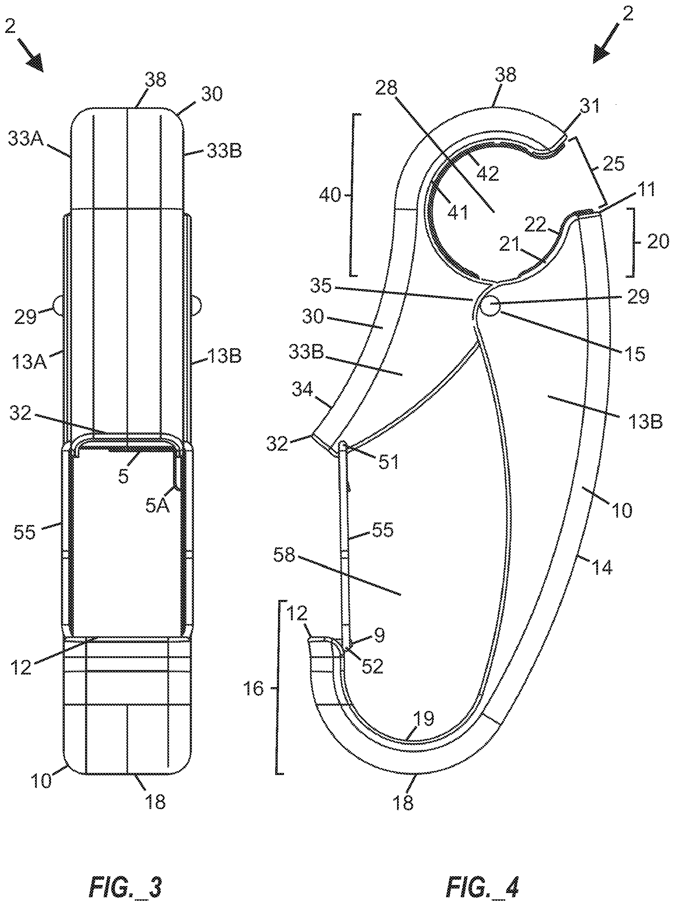

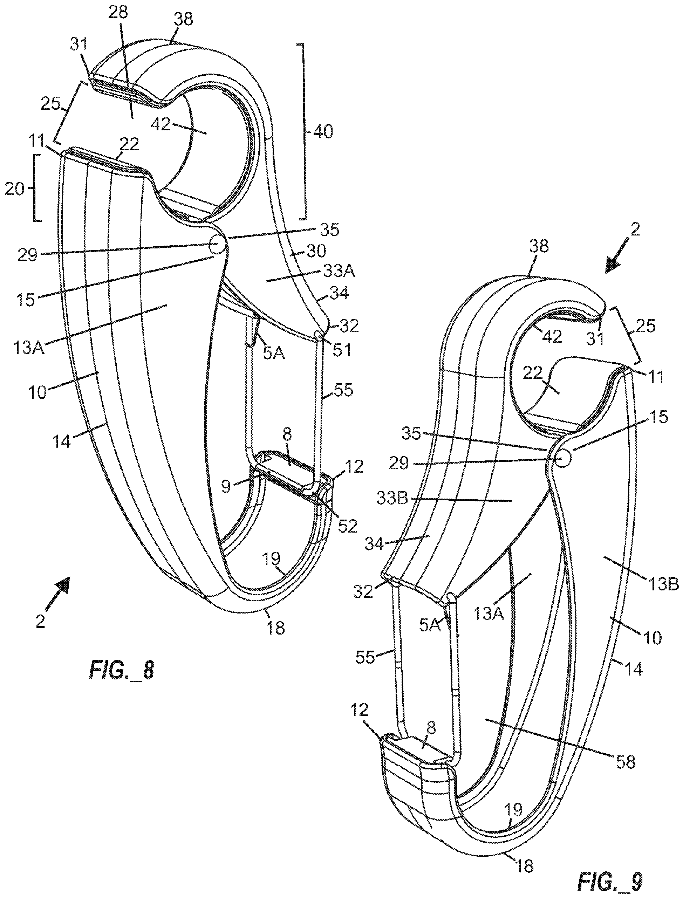

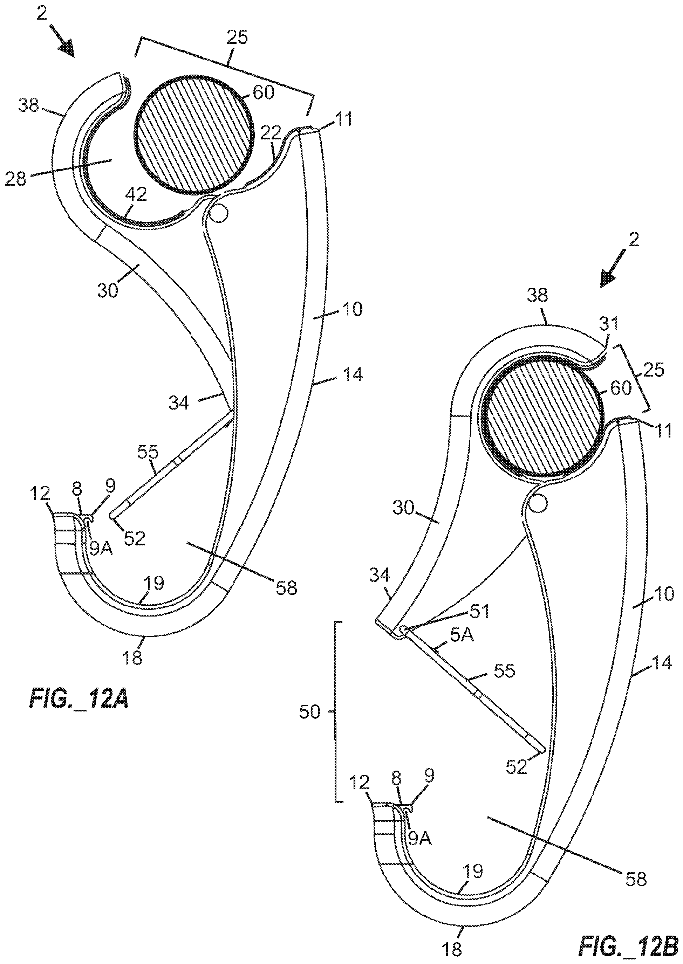

Figures 1-11 illustrate various views of a manually actuatable hanger 2 for suspending articles from a tubular carrier structure according to a first embodiment, with jaws and a gate element both in an unactuated position. Figures 12A-12B illustrate the same hanger 2 in two positions in combination with a cylindrical carrier structure 60. As shown in the preceding figures, the hanger 2 includes a main body 10, a rocker element 30, and a pivoting gate element 55.

The main body 10 includes a first jaw portion 20 proximate to a first body end 11, a hook portion 16 proximate to a second body end 12, and an aperture-defining first pivot region 15 arranged generally between the first jaw portion 20 and the hook portion 16. The hook portion 16 includes an interior surface 19 arranged to receive one or more articles to be retained within a containment zone 58 that is bounded by the main body 10 (including the hook portion 16), the pivoting gate element 55, and the rocker element 30. The main body 10 further includes a curved outer wall 14, a lower extremity 18, side walls 13A, 13B, and the aperture-defining first pivot region 15 associated with the side walls 13A, 13B. The first pivot region 15 is arranged to be registered with an aperture-defining second pivot region 35 of the rocker element 30, with the aperture of the first pivot region 15 being arranged to receive a pivot pin 29 (which may be embodied in a rod or cylinder) extending through the first pivot region 15 and the second pivot region 35.

The rocker element 30 includes a first rocker end 31, a second rocker end 32, a second jaw portion 40 proximate to the first rocker end 31, and a depressible tab portion 34 proximate to the second rocker end 32. The depressible tab portion 34 is arranged along an outer wall between side walls 33A, 33B. The rocker element 30 further includes the aperture-defining second pivot region 35 associated with the side walls 33A, 33B, with the second pivot region 35 arranged to be registered with the first pivot region 15 of the main body 10, and with the aperture of the second pivot region 35 being arranged to receive the pivot pin 29. The rocker element 30 further includes an upper extremity 38 arranged along an outer surface proximate to the second jaw portion 40.

In combination, the first jaw portion 20 and the second jaw portion 40 define a jaw opening 28, with a mouth 25 being arranged between the first body end 11 and the first rocker end 31. As illustrated in Figures 1-5 and 7-11, a gap (corresponding to the mouth 25) remains between the first body end 11 and the first rocker end 31 when the jaw portions 20, 40 are in an unactuated position. This gap may be maintained by mating of the pivoting gate element 55 with a latch 9 having a lower detent 9A associated with a travel stop 8, wherein the latch 9 is arranged to protrude through a portion of the pivoting gate element 55 when a gate opening 50 is closed by the pivoting gate element 55. Preferably, the first jaw portion 20 includes a first arcuate inner surface 21 and a coating or insert of resilient material 22 received by the first arcuate inner surface 21. Similarly, the second jaw portion 40 includes a second arcuate inner surface 41 and a coating or insert of resilient material 42 received by the second arcuate inner surface 41. Preferably, the first and second arcuate inner surfaces 21, 41 and the resilient materials 22, 42 are shaped to receive a cylindrical or tubular carrier structure (such as the carrier structure 60 shown in Figures 12A-12B). The resilient materials 22, 42 are preferably arranged to grip the carrier structure.

In certain embodiments, the resilient materials 22, 42 may each embody a pliable gripping insert, preferably wherein each pliable gripping insert includes a thickness that diminishes with proximity to a central axis of a jaw opening defined between the first and second jaw portions 20, 40. In certain embodiments, each pliable gripping insert may include a base portion and a rib portion, wherein each base portion has a first thickness in a direction parallel to a central axis extending through the jaw opening defined between the first and second jaw portions 20, 40, each rib portion has a second thickness in the direction parallel to the central axis extending through the jaw opening, and the second thickness is smaller than the first thickness.

With reference to Figures 1-11 as well as Figures 12A-12B, the pivoting gate element 55 includes upper end portions 51 arranged to be received by apertures defined in side walls 33A, 33B of the rocker element 30 (e.g., proximate to the second rocker end 32) to permit pivotal movement between the pivoting gate element 55 and the rocker element 30. The upper end portions 51 of the pivoting gate element 55 are coaxially aligned with one another. A lower segment 52 of the pivoting gate element 55 is arranged to be received by the lower detent 9A formed in the latch 9 associated with the travel stop 8. The pivoting gate element 55 includes two bends proximate to the upper end portions 51, includes two bends proximate to the lower segment 52, and forms a generally rectangular loop.

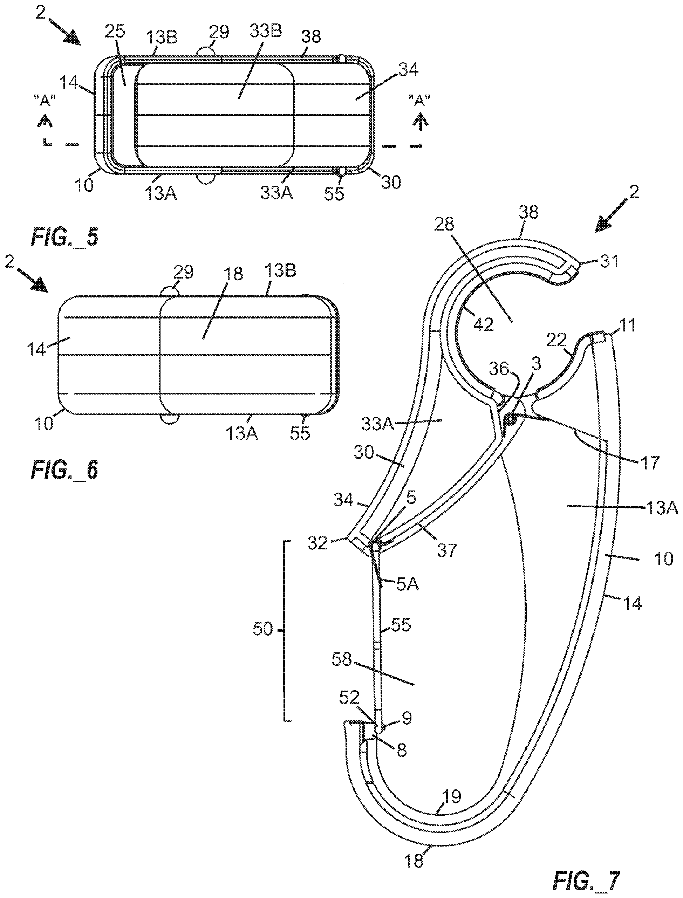

Figure 7 is a right side cross-sectional view illustration of the hanger 2, taken along section line "A"-"A" illustrated in Figure 5. A first biasing element 3 (e.g., embodied in or including a first torsion spring) is coaxially arranged with the pivot pin 29, and includes ends arranged to press against internal landing surfaces 17, 36 of the main body 10 and the rocker element 30, respectively. In this manner, the first biasing element 3 is configured to exert a rotational force between the main body 10 and the rocker element 30, and is configured to resist expansion of the jaw opening 28 between the first jaw portion 20 and the second jaw portion 40. With continued reference to Figure 7, a second biasing element 5 (e.g., embodied in or including a second torsion spring) includes one end arranged to press against an internal landing surface 37 of the rocker element 30 and includes an exposed end 5A arranged to press against the pivoting gate element 55. In this manner, the second biasing element 5 is configured to bias the pivoting gate element 55 to resist opening of the gate opening 50.

Figures 12A-12B illustrate the hanger 2 in different positions relative to the cylindrical carrier structure 60. Figure 12A shows the hanger 2 in an actuated position, with the depressible tab portion 34 of the rocker element 30 pressed inwardly toward the main body 10. Preferably, the hanger is sized to permit four fingers of a user's hand to wrap around the curved outer wall 14 of the main body 10, while the user's thumb presses against the depressible tab portion 34 to cause such actuation. In the actuated position shown in Figure 12A, the jaw opening 28 is in an expanded state (i.e., with a width exceeding a cross-sectional diameter of the cylindrical carrier structure 60), permitting the jaw opening 28 to receive the cylindrical carrier structure 60. At the same time, inward motion of the depressible tab portion 34 may cause the pivoting gate element 55 to be translated inward, such that the lower segment 52 of the pivoting gate element 55 may lose contact with the travel stop 8 and associated latch 9 and lower detent 9A.

Figure 12B shows the hanger 2 in an unactuated position, following release of pressure applied to the depressible tab portion 34. Upon release of pressure applied to the depressible tab portion 34, the first biasing element 3 causes the first and second jaw portions 20, 40 to move toward one another, thereby contracting the jaw opening 28 and causing the first and second jaw portions 20, 40 (preferably including resilient materials 22, 42) to engage and grip the cylindrical carrier structure 60. In such a state, the gap between the first body end 11 and the first rocker end 31 (corresponding to the mouth 25) is smaller than the cross-sectional diameter of the cylindrical carrier structure 60. Figure 12B also shows the pivoting gate element 55 in a position pivoted inward toward the interior surface 19 of the hook portion 16. Such position may be attained by manually pressing the pivoting gate element 55 inward with sufficient force to overcome a rotational force exerted by the second biasing element 5 against the pivoting gate element 55. When the pivoting gate element 55 is arranged in such an open position, one or more articles (e.g., purse handles, bag handles, or the like) may be inserted through the gate opening 50 into the containment zone 58 and hung from the interior surface 19 of the hook portion 16.

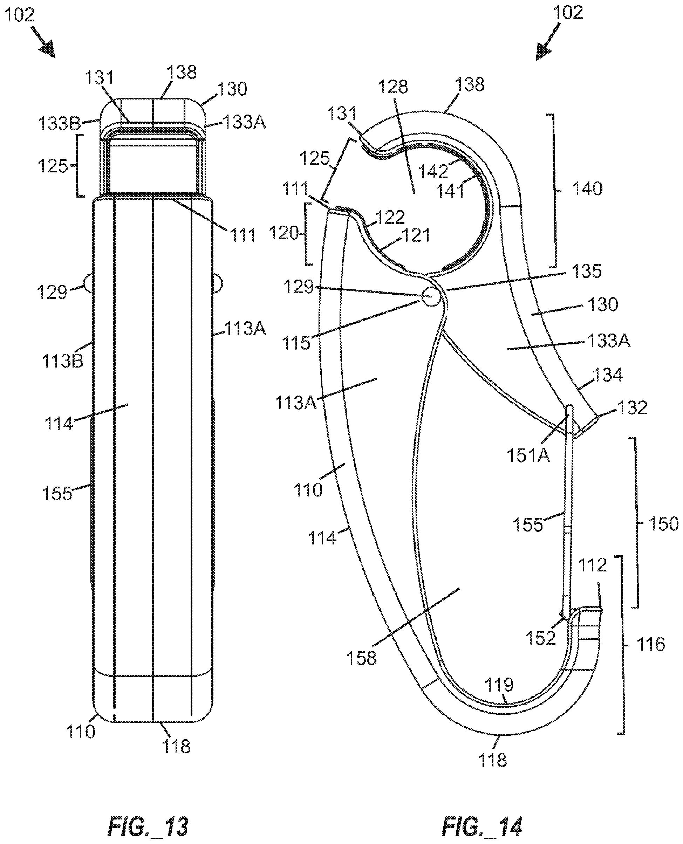

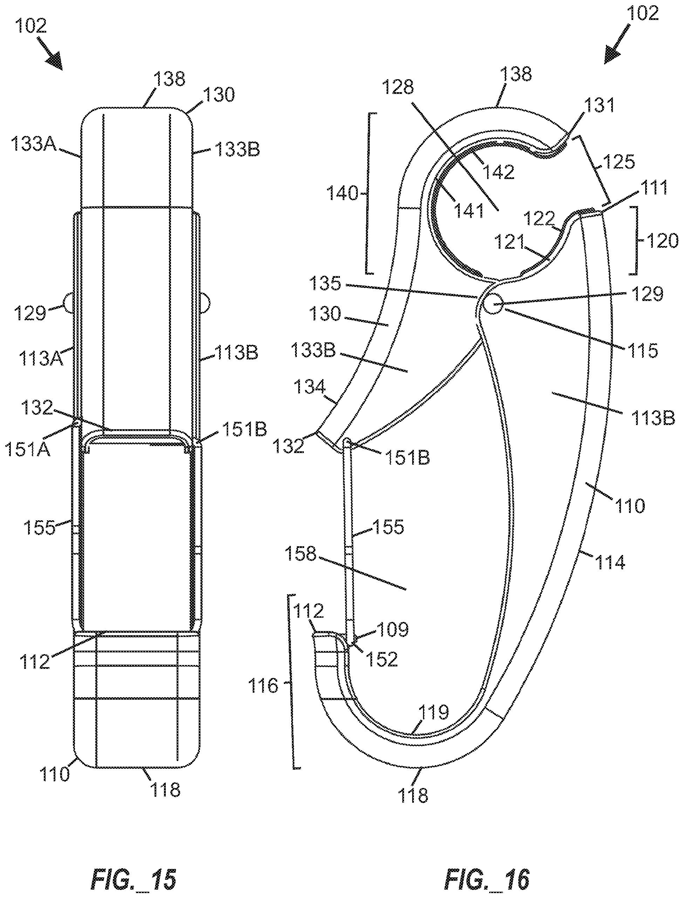

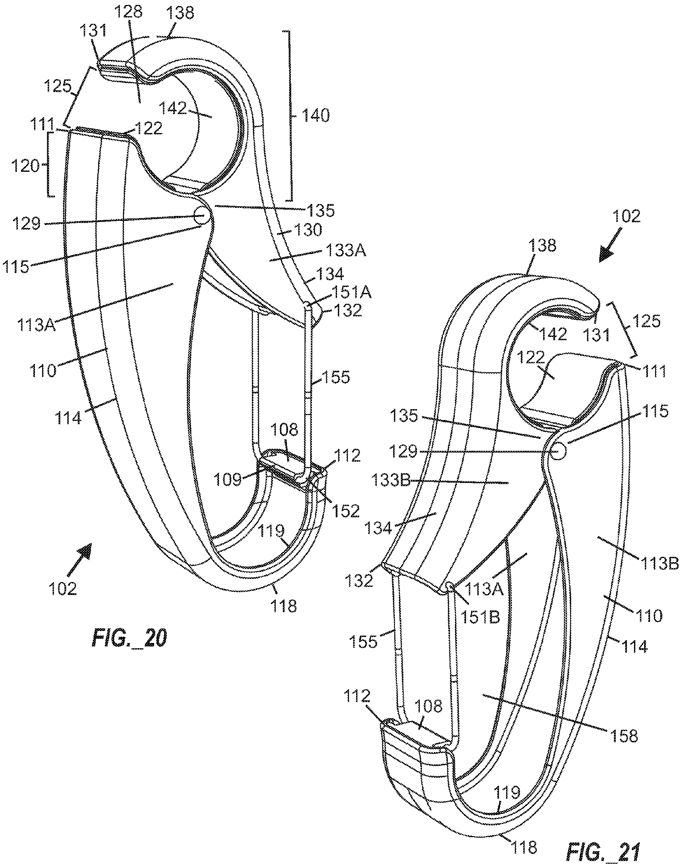

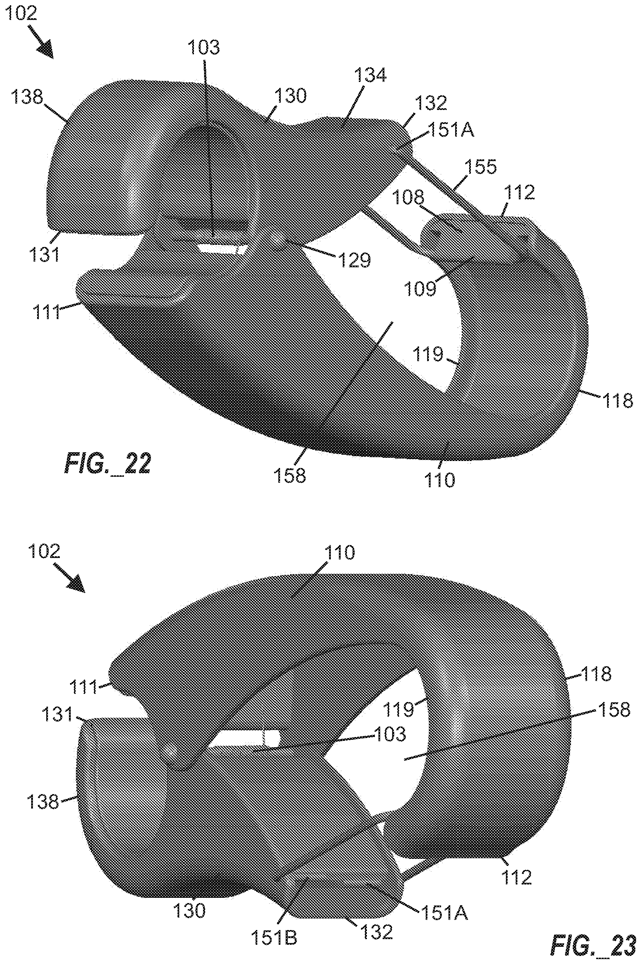

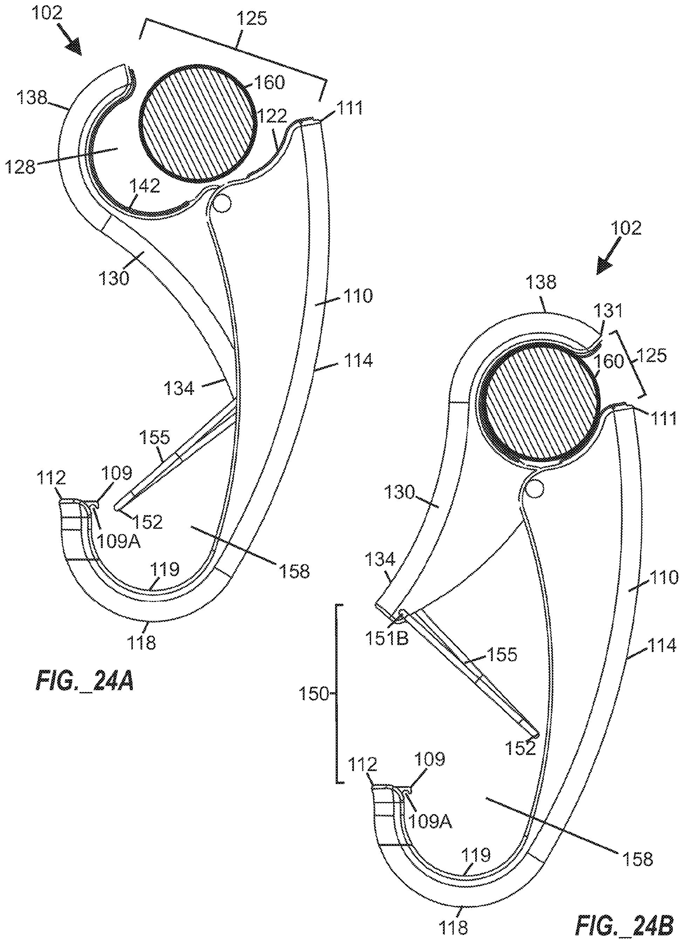

Figures 13-23 illustrate various views of a manually actuatable hanger 102 for suspending articles from a tubular carrier structure according to a second embodiment, with jaws and a gate element both in an unactuated position. Figures 24A-24B illustrate the same hanger 102 in two positions in combination with a cylindrical carrier structure 160. As shown in the preceding figures, the hanger 102 includes a main body 110, a rocker element 130, and a pivoting gate element 155. A primary difference between the hanger 102 according to the second embodiment and the hanger 2 according to the first embodiment is the structure used for biasing the pivoting gate element.

The main body 110 includes a first jaw portion 120 proximate to a first body end 111, a hook portion 116 proximate to a second body end 112, and an aperture-defining first pivot region 115 arranged generally between the first jaw portion 120 and the hook portion 116. The hook portion 116 includes an interior surface 119 arranged to receive one or more articles to be retained within a containment zone 158 that is bounded by the main body 110 (including the hook portion 116), the pivoting gate element 155, and the rocker element 130. The main body 110 further includes a curved outer wall 114, a lower extremity 118, side walls 113A, 113B, and the aperture-defining first pivot region 115 associated with the side walls 113A, 113B. The first pivot region 115 is arranged to be registered with an aperture-defining second pivot region 135 of the rocker element 130, with the aperture of the first pivot region 115 being arranged to receive a pivot pin 129 (which may be embodied in a rod or cylinder) extending through the first pivot region 115 and the second pivot region 135.

The rocker element 130 includes a first rocker end 131, a second rocker end 132, a second jaw portion 140 proximate to the first rocker end 131, and a depressible tab portion 134 proximate to the second rocker end 132. The depressible tab portion 134 is arranged along an outer wall between side walls 133A, 133B. The rocker element 130 further includes the aperture-defining second pivot region 135 associated with the side walls 133A, 133B, with the second pivot region 135 arranged to be registered with the first pivot region 115 of the main body 110, and with the aperture of the second pivot region 135 being arranged to receive the pivot pin 129. The rocker element 130 further includes an upper extremity 138 arranged along an outer surface proximate to the second jaw portion 140.

In combination, the first jaw portion 120 and the second jaw portion 140 define a jaw opening 128, with a mouth 125 being arranged between the first body end 111 and the first rocker end 131. As illustrated in Figures 13-18 and 19-23, a gap (corresponding to the mouth 125) remains between the first body end 111 and the first rocker end 131 when the jaw portions 120, 140 are in an unactuated position. This gap may be maintained by mating of the pivoting gate element 155 with a latch 109 having a lower detent 109A associated with a travel stop 108, wherein the latch 109 is arranged to protrude through a portion of the pivoting gate element 155 when a gate opening 150 is closed by the pivoting gate element 155. Preferably, the first jaw portion 120 includes a first arcuate inner surface 121 and a coating or insert of resilient material 122 received by the first arcuate inner surface 121. Similarly, the second jaw portion 140 includes a second arcuate inner surface 141 and a coating or insert of resilient material 142 received by the second arcuate inner surface 141. Preferably, the first and second arcuate inner surfaces 121, 141 and the resilient materials 122, 142 are shaped to receive a cylindrical or tubular carrier structure (such as the carrier structure 160 shown in Figures 24A-24B). The resilient materials 122, 142 are preferably arranged to grip the carrier structure.

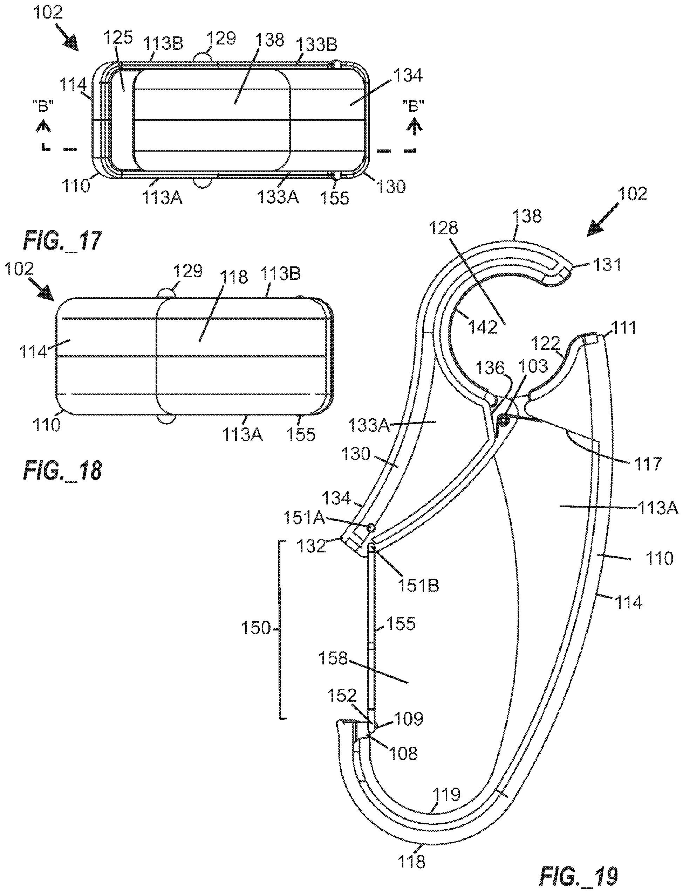

With reference to Figures 13-23 as well as Figures 24A-24B, the pivoting gate element 155 includes upper end portions 151A, 151B arranged to be received by apertures defined in side walls 133A, 133B of the rocker element 130 (e.g., proximate to the second rocker end 132) to permit pivotal movement between the pivoting gate element 155 and the rocker element 130. A lower segment 152 of the pivoting gate element 155 is arranged to be received by the lower detent 109A formed in the latch 109 associated with the travel stop 108. The pivoting gate element 155 includes two bends proximate to the upper end portions 151A, 151B, includes two bends proximate to the lower segment 152, and forms a generally rectangular loop. The upper end portions 151A, 151B of the pivoting gate element 155 are axially offset relative to one another, with the first upper end portion 151A being arranged higher than the second end portion 151B (e.g., as shown in Figures 19, 23, 24A, and 24B). Such offset between the upper end portions 151A, 151B causes the pivoting gate element 155 to twist slightly when it is pressed inward (e.g., as shown in Figure 24B), and thereby causes the pivoting gate element 155 to be biased to resist opening of the gate opening 150. Providing axially offset upper end portions 151A, 151B of the pivoting gate element 155 eliminates the need for a separate second biasing element (e.g., second torsion spring) used in the first embodiment of Figures 1 to 12B.

Figure 19 is a right side cross-sectional view illustration of the hanger 102, taken along section line "B"-"B" illustrated in Figure 17. A first biasing element 103 (e.g., embodied in or including a first torsion spring) is coaxially arranged with the pivot pin 129, and includes ends arranged to press against internal landing surfaces 117, 136 of the main body 110 and the rocker element 130, respectively. In this manner, the first biasing element 103 is configured to exert a rotational force between the main body 110 and the rocker element 130, and is configured to resist expansion of the jaw opening 128 between the first jaw portion 120 and the second jaw portion 140. With continued reference to Figure 19, the upper end portions 151A, 151B of the pivoting gate element 155 are axially offset relative to one another, with the first upper end portion 151A being arranged higher than the second end portion 151B.

Figures 24A-24B illustrate the hanger 102 in different positions relative to the cylindrical carrier structure 160. Figure 24A shows the hanger 102 in an actuated position, with the depressible tab portion 134 of the rocker element 130 pressed inwardly toward the main body 110. Preferably, the hanger 102 is sized to permit four fingers of a user's hand to wrap around the curved outer wall 114 of the main body 110, while the user's thumb presses against the depressible tab portion 134 to cause such actuation. In the actuated position shown in Figure 24A, the jaw opening 128 is in an expanded state (i.e., with a width exceeding a cross-sectional diameter of the cylindrical carrier structure 160), permitting the jaw opening 128 to receive the cylindrical carrier structure 160. At the same time, inward motion of the depressible tab portion 134 may cause the pivoting gate element 155 to be translated inward, such that the lower segment 152 of the pivoting gate element 155 may lose contact with the travel stop 108 and associated latch 109 and lower detent 109A.

Figure 24B shows the hanger 102 in an unactuated position, following release of pressure applied to the depressible tab portion 134. Upon release of pressure applied to the depressible tab portion 134, the first biasing element 103 causes the first and second jaw portions 120, 140 to move toward one another, thereby contracting the jaw opening 128 and causing the first and second jaw portions 120, 140 (preferably including resilient materials 122, 142) to engage and grip the cylindrical carrier structure 160. In such a state, the gap between the first body end 111 and the first rocker end 131 (corresponding to the mouth 125) is smaller than the cross-sectional diameter of the cylindrical carrier structure 160. Figure 24B also shows the pivoting gate element 155 in a position pivoted inward toward the interior surface 119 of the hook portion 116. Such position may be attained by manually pressing the pivoting gate element 155 inward with sufficient force to overcome rotational resistance caused by axially offset upper ends 151A, 151B of the pivoting gate element 155. When the pivoting gate element 155 is arranged in such an open position, one or more articles (e.g., purse handles, bag handles, or the like) may be inserted through the gate opening 150 into the containment zone 158 and hung from the interior surface 119 of the hook portion 116.

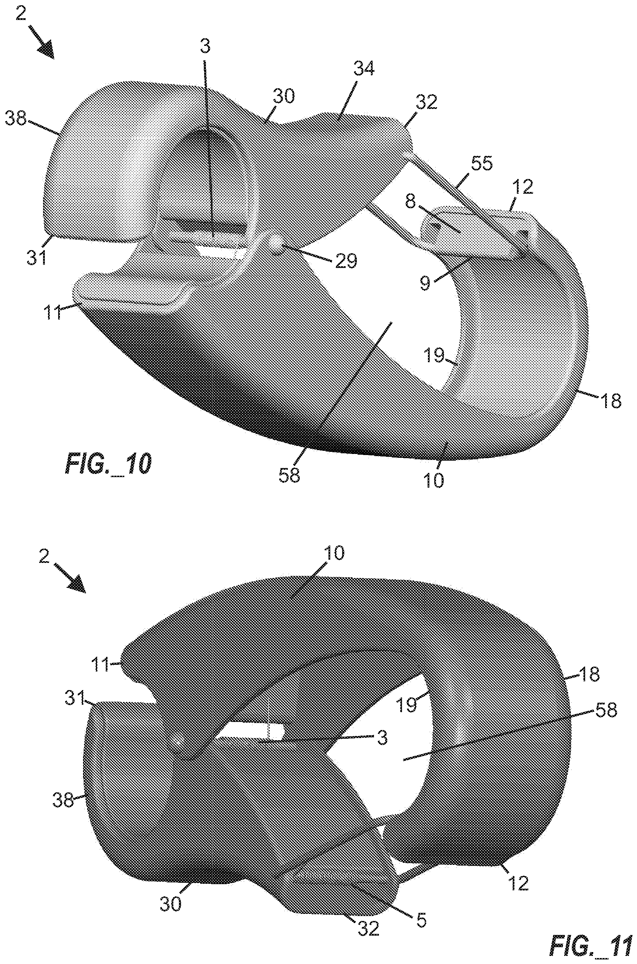

Although Figures 1-6, 8, and 9 illustrate various lines visible along exterior surfaces of the main body 10 and the rocker element 30 (and Figures 13-18, 20, and 21 illustrate various lines visible along exterior surfaces of the main body 110 and the rocker element 130), it is to be appreciated that such lines are provided to depict contours of the respective hangers 2, 102 without the lines necessarily representing ornamental features. The renderings of Figures 10, 11, 22, and 23 demonstrate that external surfaces of the hangers 2, 102 may be devoid of lines or other ornamentation in certain embodiments.

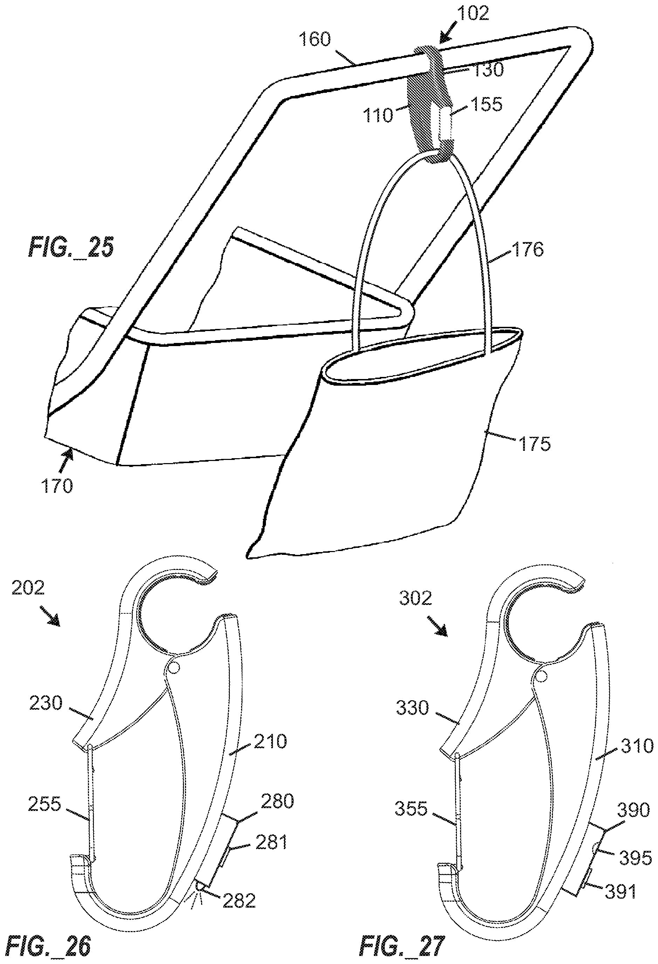

Figure 25 is a perspective view of a manually actuatable hanger 102 including a main body 110, a rocker element 130, and a pivoting gate element 155 as disclosed herein affixed to a cylindrical or tubular carrier structure 160 of a mobile vehicle 170 (such as a baby stroller or a shopping cart), with a handle 176 of an article 175 suspended from the hanger.

Figure 26 is a right side elevation view illustration of a manually actuatable hanger 202 for suspending articles from a cylindrical or tubular carrier structure according to a third embodiment, with the hanger 202 including an integrated flashlight element 280 having a control switch 281 (e.g., a pushbutton) and a light emitting surface 282. The flashlight element 280 may be powered by an internal battery (not shown). The hanger 202 further includes a main body 210, a rocker element 230, and a pivoting gate element 255 that are the same or substantially similar to the corresponding elements described previously herein in connection with the first and second embodiments.

Figure 27 is a right side elevation view illustration of a manually actuatable hanger 302 for suspending articles from a cylindrical or tubular carrier structure according to a fourth embodiment, with the hanger 302 including an audible alarm generating element 390 having a control switch 391 (e.g., a pushbutton) and a speaker 395. The audible alarm generating element 390 may be powered by an internal battery (not shown). The hanger 302 further includes a main body 310, a rocker element 330, and a pivoting gate element 355 that are the same or substantially similar to the corresponding elements described previously herein in connection with the first and second embodiments.

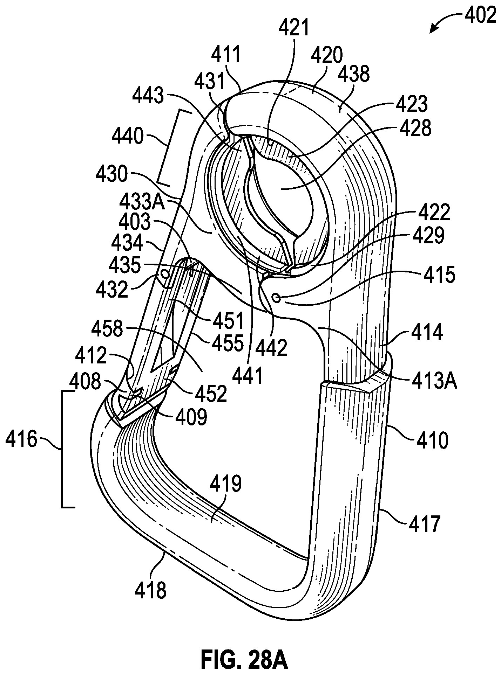

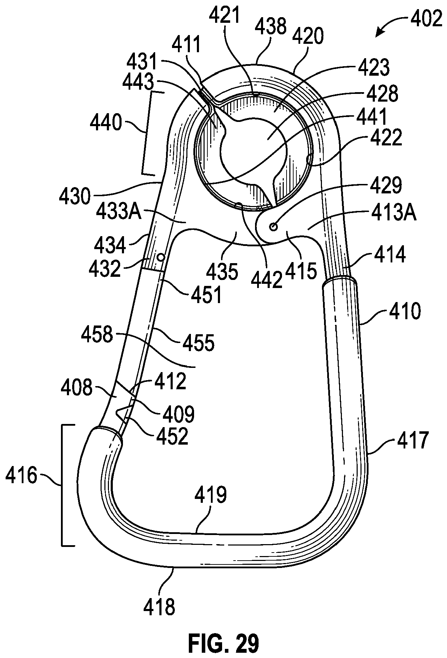

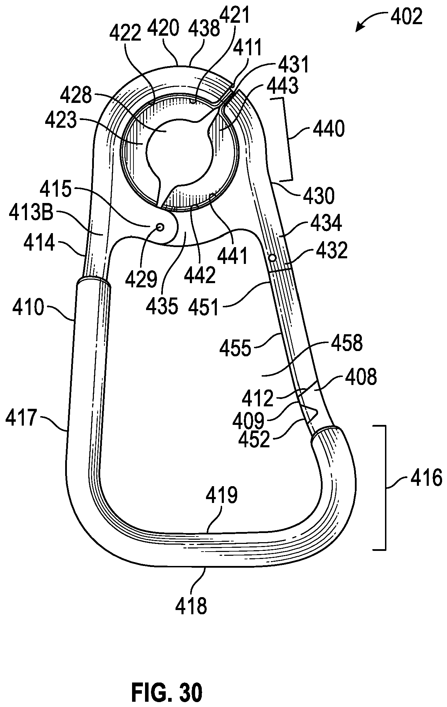

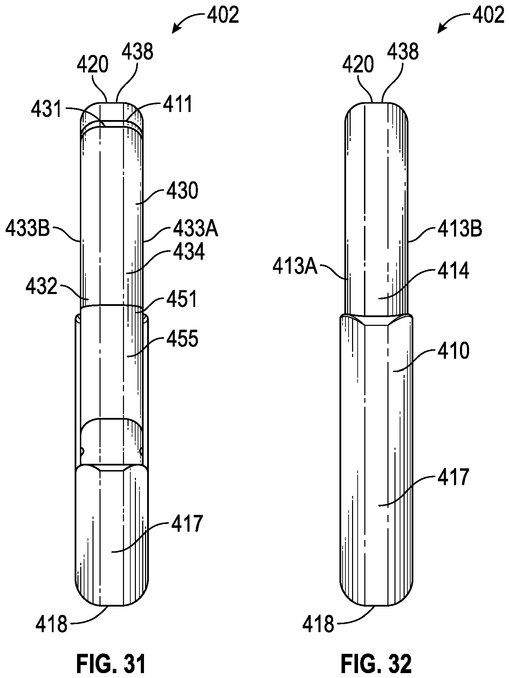

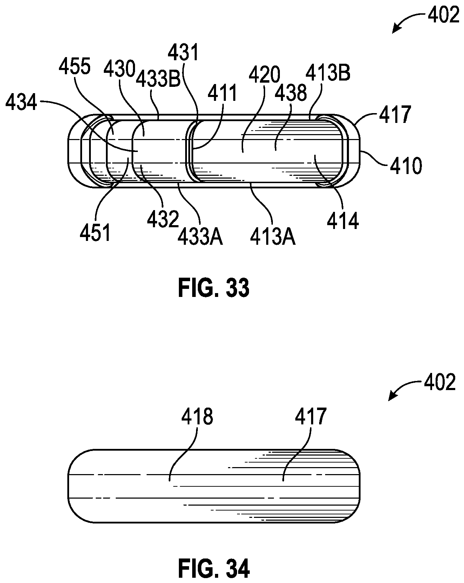

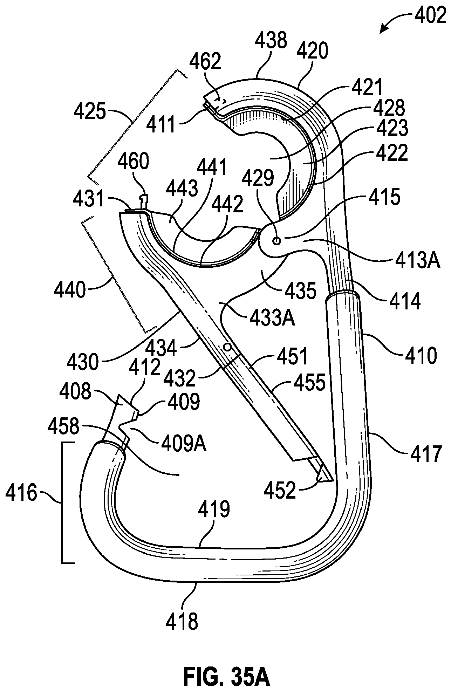

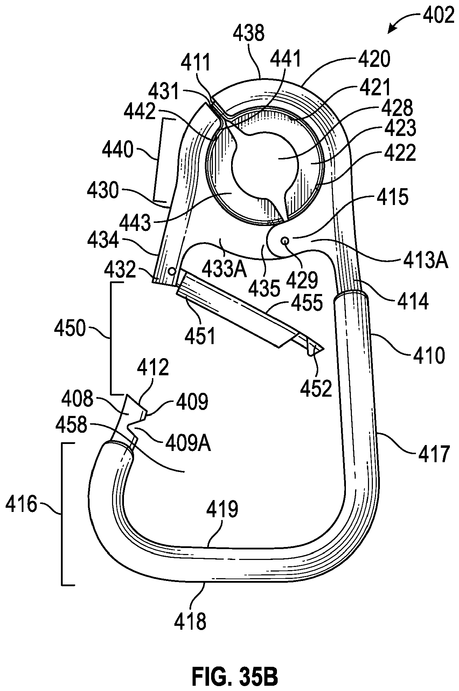

Figures 28A-34 illustrate various views of a manually actuatable hanger 402 for suspending articles from a tubular carrier structure according to a fifth embodiment, with jaws and a gate element both in an unactuated position. Figures 35A and 35B show the same hanger 402 in different actuated positions. As shown in Figures 28A- 35B, the hanger 402 includes a main body 410, a rocker element 430, and a pivoting gate element 455. The manually actuatable hanger 402 includes the same or similar elements to the embodiments described above with respect to Figures 1-27, except where otherwise noted.

The main body 410 includes a first jaw portion 420 proximate to a first body end 411, a hook portion 416 proximate to a second body end 412, and an aperture-defining first pivot region 415 arranged generally between the first jaw portion 420 and the hook portion 416. The hook portion 416 includes an interior surface 419 arranged to receive one or more articles to be retained within a containment zone 458 that is bounded by the main body 410 (including the hook portion 416), the pivoting gate element 455, and the rocker element 430. The main body 410 further includes an outer wall 414, a lower extremity 418, side walls 413A, 413B, and the aperture-defining first pivot region 415 associated with the side walls 413A, 413B. The first pivot region 415 is arranged to be registered with an aperture-defining second pivot region 435 of the rocker element 430, with the aperture of the first pivot region 415 being arranged to receive a pivot pin 429 (which may be embodied in a rod or cylinder) extending through the first pivot region 415 and the second pivot region 435. Further, the main body 410 may further include a sheath 417 (e.g., for gripping by a user, and/or for frictional engagement with an item retained in the containment zone 458) extending along all or a portion of the main body 410 between the second body end 412 and the aperture-defining first pivot region 415.

The rocker element 430 includes a first rocker end 431, a second rocker end 432, a second jaw portion 440 proximate to the first rocker end 431, and a depressible tab portion 434 proximate to the second rocker end 432. The depressible tab portion 434 is arranged along an outer wall between side walls 433A, 433B of the rocker element 430. The rocker element 430 further includes the aperture-defining second pivot region 435 associated with the side walls 433A, 433B, with the second pivot region 435 arranged to be registered with the first pivot region 415 of the main body 410, and with the aperture of the second pivot region 435 being arranged to receive the pivot pin 429. The rocker element 430 further includes an upper extremity 438 arranged along an outer surface proximate to the second jaw portion 440.

In combination, the first jaw portion 420 and the second jaw portion 440 define a jaw opening 428 (e.g., enclosed when in an unactuated position), with a mouth 425 being arranged between the first body end 411 and the first rocker end 431 when in the actuated position (shown in Figure 35A). As illustrated in Figures 28A-34 and 35B, no gap remains between the first body end 411 and the first rocker end 431 when the first and second jaw portions 420, 440 are in an unactuated position. This may be maintained by mating of the pivoting gate element 455 with a latch 409 having a lower detent 409A (shown in Figures 35A and 35B) associated with a travel stop 408, wherein the latch 409 is arranged to protrude through a portion of the pivoting gate element 455 when a gate opening 450 (shown in Figure 35A) is closed by the pivoting gate element 455. There could also be a locking device (e.g., mechanical, magnetic, etc.) to maintain engagement of a lower segment 452 of the pivoting gate element 455 with the travel stop 408.

In certain embodiments, at least one locking mechanism may be provided between the first body end 411 and the first rocker end 431. For example, the first body end 411 may include a first locking element 460 (e.g., first mating interface) and the first rocker end 431 may include a second locking element 462 (e.g., second mating interface), where the first locking element 460 and second locking element 462 are complementary to one another to resist initial separation between the first body end 411 and the first rocker end 431, such as by mechanical engagement (e.g., slider, hinge, hook, etc.), and/or magnetic engagement, etc. Presence of at least one locking mechanism permits the first body end 411 and first rocker end 431 to be engaged with one another by friction, engagement of surface features, magnetic force, etc. For example, as shown in Figure 35A, the first locking element 460 includes a protrusion (optionally embodied in a prong with a nub) that is insertable into a correspondingly positioned second locking element 462 (optionally embodied in a recess or groove), and maintained therein by friction and/or a biasing force, to permit selective engagement of the first and second locking elements 460, 462.

In certain embodiments, the first jaw portion 420 includes a first arcuate inner surface 421 arranged to receive a first pliable gripping insert including a first base portion 422 and a first rib portion 423 that extends radially inward relative to the first base portion 422. Similarly, the second jaw portion 440 includes a second arcuate inner surface 441 arranged to receive a second pliable gripping insert including a second base portion 442 and a second rib portion 443 that extends radially inward relative to the base portion 442. Preferably, the first and second arcuate inner surfaces 421, 441 as well as the first and second pliable gripping inserts (including base portions 422, 442 and rib portions 423, 443) are shaped to receive a cylindrical or tubular carrier structure (such as the carrier structure 60 shown in Figures 12A and 12B). Additionally, the first and second pliable gripping inserts (including the first base portion 422, the second base portion 442, the first rib portion 423, and the second rib portion 443) are preferably each formed of a resilient material (e.g., rubber, silicone, silicone rubber, or the like) to promote gripping of a cylindrical or tubular carrier structure received within the jaw opening 428 without slippage.

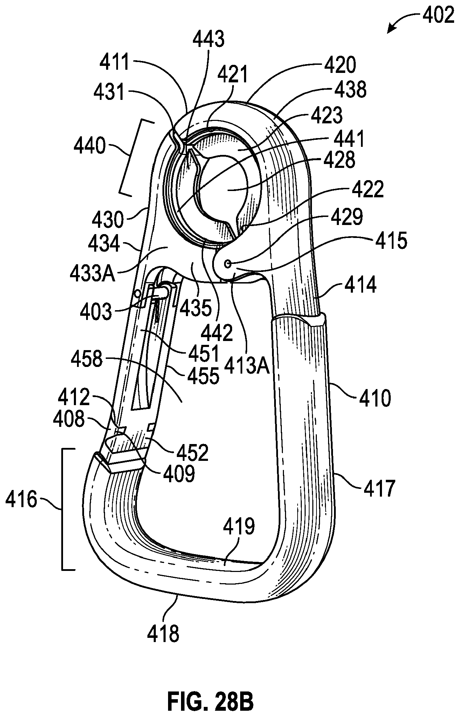

As shown in Figures 28A, 28B, 35A, and 35B, the first and second rib portions 423, 443 extend radially inward relative to the first and second base portions 422, 442, and each rib portion 423, 443 includes a thickness that is smaller than a thickness of a corresponding base portion 422, 442 (with such thickness being in a direction parallel to a central axis extending through the jaw opening 428). In combination, the first and second rib portions 423, 443 bound a reduced diameter portion of the jaw opening 428 in comparison to the first and second base portions 422, 442. The reduced thickness character of the rib portions 423, 443 permits the rib portions 423, 443 to be deformed (e.g., in a radially outward direction) when the manually actuatable hanger 402 receives a tubular carrier structure having a larger diameter than the reduced diameter portion of the jaw opening 428 bounded by the rib portions 423, 443, thereby permitting the manually actuatable hanger 402 to receive and grip tubular structures of various different sizes (e.g., diameters). More specifically, the first and second rib portions 423, 443 are configured to non-compressionally engage a cylindrical or tubular carrier structure with a diameter less than that formed by the first and second pliable gripping inserts. The first and second rib portions 423, 443 are configured to compressionally engage (e.g., by deformation of the rib portions 423, 443) a cylindrical or tubular carrier structure with a diameter greater than that formed by the first and second rib portions 423, 443. In either instance, the resilient material (e.g., rubber, silicone, silicone rubber, or the like) of the pliable gripping inserts (including the rib portions 423, 443 and the base portions 422, 442) is preferably formed of a resilient material to resist lateral slippage between the hanger 402 and a tubular carrier structure (not shown) on which the hanger 402 is received.

With reference to Figures 28A-35B, the pivoting gate element 455 includes upper end portions 451 arranged to be received by apertures defined in side walls 433A, 433B of the rocker element 430 (e.g., proximate to the second rocker end 432) to permit pivotal movement between the pivoting gate element 455 and the rocker element 430. The upper end portions 451 of the pivoting gate element 455 are coaxially aligned with one another. The lower segment 452 of the pivoting gate element 455 is arranged to be received by the lower detent 409A formed in the latch 409 associated with the travel stop 408.

A first biasing element 403 (e.g., embodied in or including a first torsion spring) is coaxially arranged with the pivot pin 429, and operates similarly to that described above with respect to Figures 1-27. The first biasing element 403 is configured to exert a rotational force between the main body 410 and the rocker element 430, and is configured to resist opening of the jaw between the first jaw portion 420 and the second jaw portion 440. A second biasing element (not shown) could be included (e.g., embodied in or including a second torsion spring) and may operate similarly to the second biasing element described above in connection with Figures 1-27. The second biasing element is configured to bias the pivoting gate element 455 to resist opening of the gate opening 450.

Figures 35A and 35B illustrate the hanger 402 in different positions. Figure 35A shows the hanger 402 in a first actuated position, with the depressible tab portion 434 of the rocker element 430 pressed inwardly toward the main body 410. Preferably, the hanger 402 is sized to permit gripping by a user around the outer wall 414 of the main body 410, while the user's thumb or finger presses against the depressible tab portion 434 to cause such actuation. In the actuated position shown in Figure 35A, the jaw opening 428 is in an expanded state, permitting the jaw opening 428 to receive a cylindrical carrier structure (or any other suitable structure). At the same time, inward motion of the depressible tab portion 434 may cause the pivoting gate element 455 to be translated inward, such that the lower segment 452 of the pivoting gate element 455 may lose contact with the travel stop 408 and associated latch 409 and lower detent 409A.

Figure 35B shows the hanger 402 in a second actuated position, following release of pressure applied to the depressible tab portion 434, but with the pivoting gate element 455 pivoted away from the hook portion 416. Upon release of pressure applied to the depressible tab portion 434, the first biasing element 403 causes the first and second jaw portions 420, 440 to move toward one another, thereby contracting the jaw opening 428 and causing the first and second jaw portions 420, 440 (preferably including first and second base portions 422, 442 and/or first and second rib portions 423, 443) to engage and grip the cylindrical carrier structure. In such a state, the gap between the first body end 411 and the first rocker end 431 is smaller than the cross-sectional diameter of the cylindrical carrier structure, and preferably the first body end 411 contacts the first rocker end 431, thereby enclosing the jaw opening 428. Figure 35B shows the pivoting gate element 455 in a position pivoted inward toward the interior surface 419 of the hook portion 416. Such position may be attained by manually pressing the pivoting gate element 455 inward with sufficient force to overcome a rotational force exerted by the second biasing element (not shown) against the pivoting gate element 455. When the pivoting gate element 455 is arranged in such an open position, one or more articles (e.g., purse handles, bag handles, or the like) may be inserted through the gate opening 450 into the containment zone 458 and hung from the interior surface 419 of the hook portion 416.

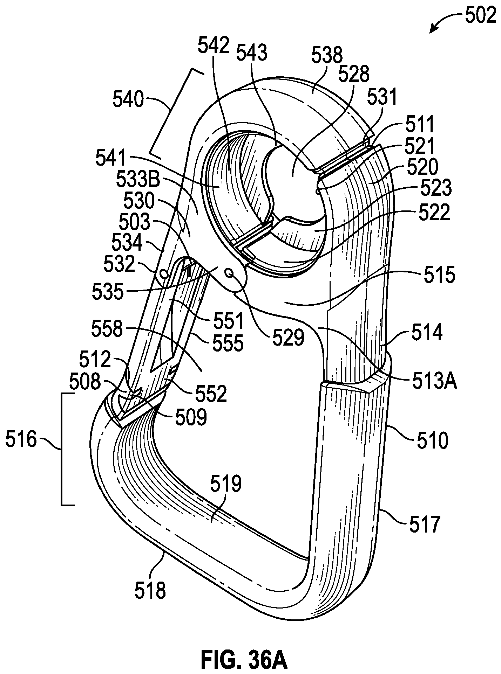

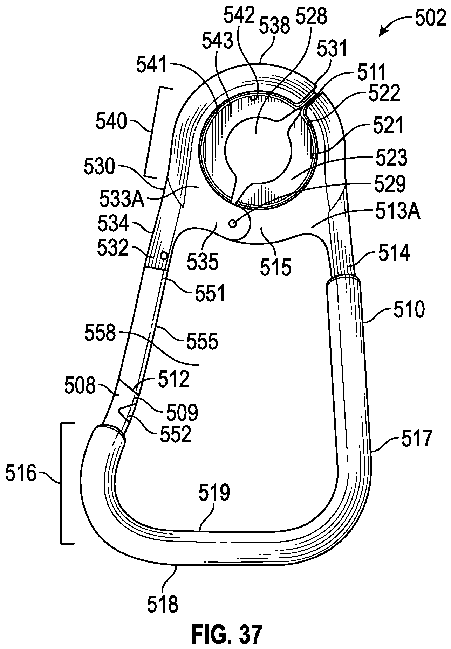

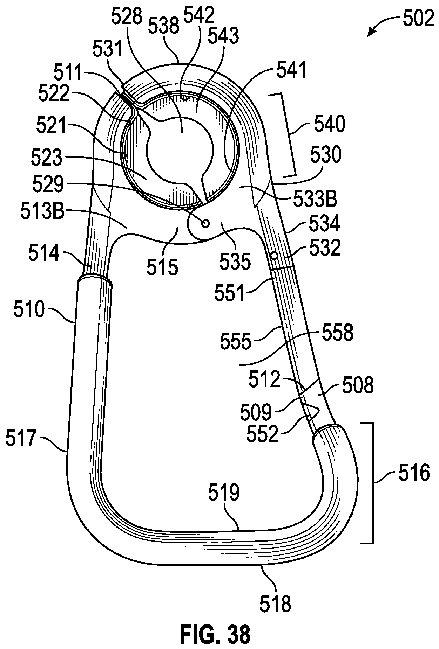

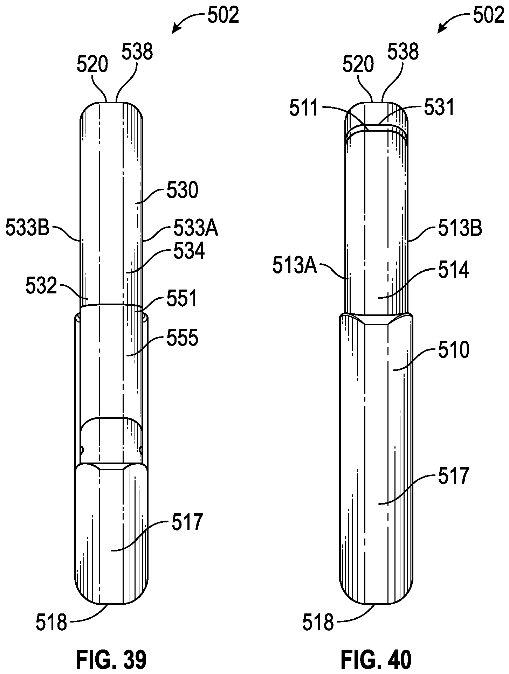

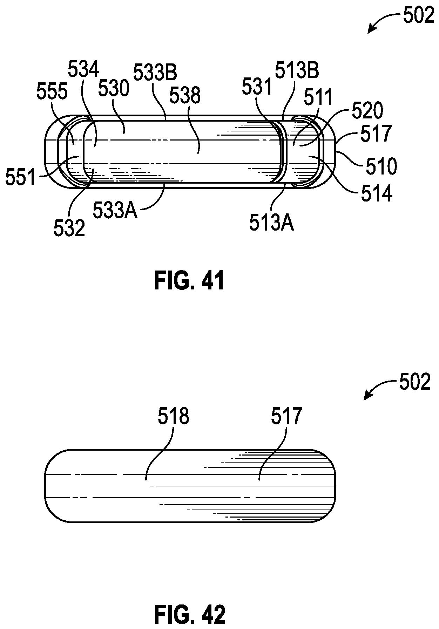

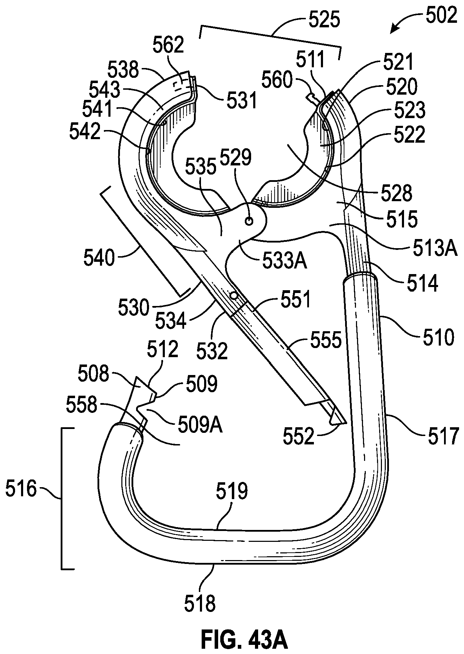

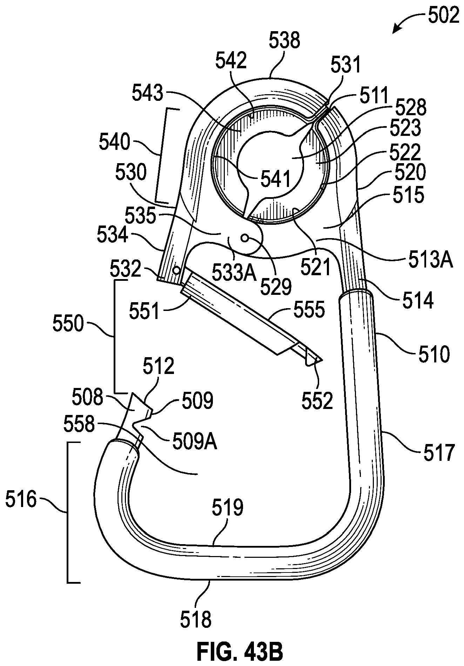

Figures 36A-42 illustrate various views of a manually actuatable hanger 502 for suspending articles from a tubular carrier structure according to a sixth embodiment, with jaws and a gate element both in an unactuated position. Figures 43A and 43B show the same hanger 402 in different actuated positions. As shown in Figures 36A-43B, the hanger 502 includes a main body 510, a rocker element 530, and a pivoting gate element 555. The manually actuatable hanger 502 includes the same or similar elements to the embodiments described above with respect to Figures 28A-35B, except where otherwise noted.

The main body 510 includes a first jaw portion 520 proximate to a first body end 511, a hook portion 516 proximate to a second body end 512, and an aperture-defining first pivot region 515 arranged generally between the first jaw portion 520 and the hook portion 516. The hook portion 516 includes an interior surface 519 arranged to receive one or more articles to be retained within a containment zone 558 that is bounded by the main body 510 (including the hook portion 516), the pivoting gate element 555, and the rocker element 530. The main body 510 further includes an outer wall 514, a lower extremity 518, side walls 513A, 513B, and the aperture-defining first pivot region 515 associated with the side walls 513A, 513B. The first pivot region 515 is arranged to be registered with an aperture-defining second pivot region 535 of the rocker element 530, with the aperture of the first pivot region 515 being arranged to receive a pivot pin 529 (which may be embodied in a rod or cylinder) extending through the first pivot region 515 and the second pivot region 535. Further, the main body 510 may further includes a sheath 517 (e.g., for gripping by a user, and/or for frictional engagement with an item retained in the containment zone 558) extending along all or a portion of the main body 510 between the second body end 512 and the aperture-defining first pivot region 515.

The rocker element 530 includes a first rocker end 531, a second rocker end 532, a second jaw portion 540 proximate to the first rocker end 531, and a depressible tab portion 534 proximate to the second rocker end 532. The depressible tab portion 534 is arranged along an outer wall between side walls 533A, 533B. The rocker element 530 further includes the aperture-defining second pivot region 535 associated with the side walls 533A, 533B, with the second pivot region 535 arranged to be registered with the first pivot region 515 of the main body 510, and with the aperture of the second pivot region 335535 being arranged to receive the pivot pin 529. The rocker element 530 further includes an upper extremity 538 arranged along an outer surface proximate to the first jaw portion 520.

In combination, the first jaw portion 520 and the second jaw portion 540 define a jaw opening 528 (e.g., enclosed when in an unactuated position), with a mouth 525 being arranged between the first body end 511 and the first rocker end 531 when in the actuated position (shown in Figure 43A). As illustrated in Figures 36A-42 and 43B, no gap remains between the first body end 511 and the first rocker end 531 when the jaw portions 520, 540 are in an unactuated position. This may be maintained by mating of the pivoting gate element 555 with a latch 509 having a lower detent 509A (shown in Figures 43A and 43B) associated with a travel stop 508, wherein the latch 509 is arranged to protrude through a portion of the pivoting gate element 555 when a gate opening 550 (shown in Figure 43B) is closed by the pivoting gate element 555. There could also be a locking device (e.g., mechanical, magnetic, etc.) to maintain engagement of a lower segment 552 of the pivoting gate element 555 with the travel stop 508.

In certain embodiments, at least one locking mechanism may be provided between the first body end 511 and the first rocker end 531. For example, the first body end 511 may include a first locking element 560 (e.g., first mating interface) and the first rocker end 531 may include a second locking element 562 (e.g., second mating interface), where the first locking element 560 and second locking element 562 are complementary to one another to resist initial separation between the first body end 511 and the first rocker end 531, such as by mechanical engagement (e.g., slider, hinge, hook, etc.), and/or magnetic engagement, etc. Presence of at least one locking mechanism permits the first body end 511 and first rocker end 531 to be engaged with one another by friction, engagement of surface features, magnetic force, etc. For example, as shown in Figure 43A, the first locking element 560 includes a protrusion (optionally embodied in a prong with a nub) that is insertable into a correspondingly positioned second locking element 562 (optionally embodied in a recess or groove), and maintained therein by friction and/or a biasing force, to permit selective engagement of the first and second locking elements 560, 562.

In certain embodiments, the first jaw portion 520 includes a first arcuate inner surface 521 arranged to receive a first pliable gripping insert including a first base portion 522 and a first rib portion 523 that extends radially inward relative to the first base portion 522. Similarly, the second jaw portion 540 includes a second arcuate inner surface 541 arranged to receive a second pliable gripping insert including a second base portion 542 and a second rib portion 543 that extends radially inward relative to the base portion 542. Preferably, the first and second arcuate inner surfaces 521, 541 as well as the first and second pliable gripping inserts (including base portions 522, 542 and rib portions 523, 543) are shaped to receive a cylindrical or tubular carrier structure (such as the carrier structure 60 shown in Figures 12A and 12B). Additionally, the first and second pliable gripping inserts (including the first base portion 522, the second base portion 542, the first rib portion 523, and the second rib portion 543) are preferably each formed of a resilient material (e.g., rubber, silicone, silicone rubber, or the like) to promote gripping of a cylindrical or tubular carrier structure received within the jaw opening 528 without slippage.

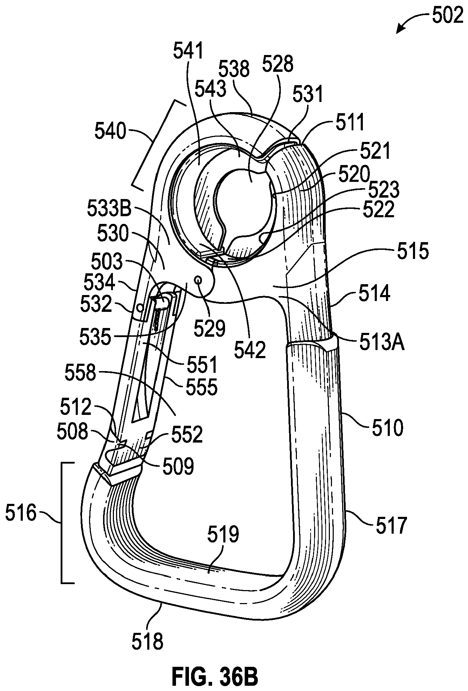

As shown in Figures 36A, 36B, 43A, and 43B, the first and second rib portions 523, 543 extend radially inward relative to the first and second base portions 522, 542, and each rib portion 523, 543 includes a thickness that is smaller than a thickness of a corresponding base portion 522, 542 (with such thickness being in a direction parallel to a central axis extending through the jaw opening 528). In combination, the first and second rib portions 523, 543 bound a reduced diameter portion of the jaw opening 528 in comparison to the first and second base portions 522, 542. The reduced thickness character of the rib portions 523, 543 permits the rib portions 523, 543 to be deformed (e.g., in a radially outward direction) when the manually actuatable hanger 502 receives a tubular carrier structure having a larger diameter than the reduced diameter portion of the jaw opening 528 bounded by the rib portions 523, 543, thereby permitting the manually actuatable hanger 502 to receive and grip tubular structures of various different sizes (e.g., diameters). More specifically, the first and second rib portions 523, 543 are configured to non-compressionally engage a cylindrical or tubular carrier structure with a diameter less than that formed by the first and second pliable gripping inserts. The first and second rib portions 523, 543 are configured to compressionally engage (e.g., by deformation of the rib portions 523, 543) a cylindrical or tubular carrier structure with a diameter greater than that formed by the first and second rib portions 523, 543. In either instance, the resilient material (e.g., rubber, silicone, silicone rubber, or the like) of the pliable gripping inserts (including the rib portions 523, 543 and the base portions 522, 542) is preferably formed of a resilient material to resist lateral slippage between the hanger 502 and a tubular carrier structure (not shown) on which the hanger 502 is received.

With reference to Figures 36A-43B, the pivoting gate element 555 includes upper end portions 551 arranged to be received by apertures defined in side walls 533A, 533B of the rocker element 530 (e.g., proximate to the second rocker end 532) to permit pivotal movement between the pivoting gate element 555 and the rocker element 530. The upper end portions 551 of the pivoting gate element 555 are coaxially aligned with one another. The lower segment 552 of the pivoting gate element 555 is arranged to be received by the lower detent 509A formed in the latch 509 associated with the travel stop 508.

A first biasing element 503 (e.g., embodied in or including a first torsion spring) is coaxially arranged with the pivot pin 529, and operates similarly to that described above with respect to Figures 1-35B. The first biasing element 503 is configured to exert a rotational force between the main body 510 and the rocker element 530, and is configured to resist opening of the jaw between the first jaw portion 520 and the second jaw portion 540. A second biasing element (not shown) could be included (e.g., embodied in or including a second torsion spring) and may operate similarly to the second biasing element described above in connection with Figures 1-35B. The second biasing element is configured to bias the pivoting gate element 555 to resist opening of the gate opening 550.

Figures 43A and 43B illustrate the hanger 502 in different positions. Figure 43A shows the hanger 502 in a first actuated position, with the depressible tab portion 534 of the rocker element 530 pressed inwardly toward the main body 510. Preferably, the hanger 502 is sized to permit gripping by a user around the outer wall 514 of the main body 510, while the user's thumb or finger presses against the depressible tab portion 534 to cause such actuation. In the actuated position shown in Figure 43A, the jaw opening 528 is in an expanded state, permitting the jaw opening 528 to receive a cylindrical carrier structure (or any other suitable structure). At the same time, inward motion of the depressible tab portion 534 may cause the pivoting gate element 555 to be translated inward, such that the lower segment 552 of the pivoting gate element 555 may lose contact with the travel stop 508 and associated latch 509 and lower detent 509A.

Figure 43B shows the hanger 502 in a second actuated position, following release of pressure applied to the depressible tab portion 534, but with the pivoting gate element 555 pivoted away from the hook portion 516. Upon release of pressure applied to the depressible tab portion 534, the first biasing element 503 causes the first and second jaw portions 520, 540 to move toward one another, thereby contracting the jaw opening 528 and causing the first and second jaw portions 520, 540 (preferably including first and second base portions 522, 542 and/or first and second rib portions 523, 543) to engage and grip the cylindrical carrier structure. In such a state, the gap between the first body end 511 and the first rocker end 531 is smaller than the cross-sectional diameter of the cylindrical carrier structure, and preferably the first body end 511 contacts the first rocker end 531, thereby enclosing the jaw opening 528. Figure 43B shows the pivoting gate element 555 in a position pivoted inward toward the interior surface 519 of the hook portion 516. Such position may be attained by manually pressing the pivoting gate element 555 inward with sufficient force to overcome a rotational force exerted by the second biasing element (not shown) against the pivoting gate element 555. When the pivoting gate element 555 is arranged in such an open position, one or more articles (e.g., purse handles, bag handles, or the like) may be inserted through the gate opening 550 into the containment zone 558 and hung from the interior surface 519 of the hook portion 516.

With reference to Figures 12A, 12B, 24A, 24B, 35A, 35B, 43A, and 43B, the hangers 2, 102, 202, 302, 402, 502 described herein may be used in a method for suspending one or more articles from a cylindrical or tubular structure, with the method including multiple steps. A first step includes pressing the depressible tab portion 34, 134, 434, 534 toward the hook portion 16, 116, 416, 516 to cause the second jaw portion 40, 140, 440, 540 to pivot away from the first jaw portion 20, 120, 420, 520 and expand the jaw opening 28, 128, 428, 528. A second step includes inserting the cylindrical or tubular carrier structure 60, 160 into the jaw opening 28, 128, 428, 528. A third step includes releasing pressure applied to the depressible tab portion 34, 134, 434, 534 to cause the first jaw portion 20, 120, 420, 520 and the second jaw portion 40, 140, 440, 540 to grip the cylindrical or tubular carrier structure 60, 160. A fourth step includes operating the pivoting gate element 55, 155, 255, 355, 455, 555 to open the gate opening 50, 150, 450, 550. A fifth step includes inserting the one or more articles through the gate opening 50, 150, 450, 550 to be hung from the interior surface 19, 119, 419, 519 of the hook portion 16, 116, 416, 516.

Upon reading the following description in light of the accompanying drawing figures, those skilled in the art will understand the concepts of the disclosure and will recognize applications of these concepts not particularly addressed herein. Those skilled in the art will recognize improvements and modifications to the preferred embodiments of the present disclosure. All such improvements and modifications are considered within the scope of the claims that follow.

## Claims

1. A manually actuatable hanger (2, 102, 202, 302, 402, 502) comprising:
a main body (10, 110, 210, 310, 410, 510) comprising a first body end (11, 111, 411, 511), a second body end (12, 112, 412, 512), a first jaw portion (20, 120, 420, 520) proximate to the first body end, a hook portion (16, 116, 416, 516) proximate to the second body end, and a first pivot region (15, 115, 415, 515) between the first jaw portion and the hook portion;
a rocker element (30, 130, 203, 330, 430, 530) comprising a first rocker end (31, 131, 431, 531), a second rocker end (32, 132, 432, 532), a second jaw portion (40, 140, 440, 540) proximate to the first rocker end, a manually depressible tab portion (34, 134, 434, 534) proximate to the second rocker end, and a second pivot region (35, 135, 435, 535) arranged between the second jaw portion and the depressible tab portion;
a first biasing element (3, 103, 403, 503) configured to exert a rotational force between the main body and the rocker element, and configured to resist expansion of a jaw opening between the first jaw portion and the second jaw portion; and
a pivoting gate element (55, 155, 255, 355, 455, 555) extending between the depressible tab portion and the second body end;
wherein:
the second pivot region is registered with the first pivot region and permits the rocker element to pivot relative to the main body;
the second jaw portion is configured to be pivoted away from the first jaw portion to expand the jaw opening when the depressible tab portion is pressed by a user toward the hook portion;
a gate opening (50, 150, 450, 550) is provided between the depressible tab portion and the second body end; and
the pivoting gate element is operable by the user to selectively open the gate opening to provide access to the hook portion, whereby one or more articles may be hung from an interior surface (19, 119, 419, 519) of the hook portion.

2. The manually actuatable hanger (2, 102, 202, 302, 402, 502) of claim 1, further comprising a pivot pin (29), a pivot rod, or a pivot cylinder extending through the first pivot region (15, 115, 415, 515) and the second pivot region (35, 135, 435, 535).

3. The manually actuatable hanger (2, 102, 202, 302, 402, 502) of any one of claims 1 or 2, wherein the pivoting gate element (55, 155, 255, 355, 455, 555) is pivotally linked to the rocker element (30, 130, 203, 330, 430, 530) proximate to the second rocker end (32, 132, 432, 532), and is arranged to pivot inward toward the interior surface (19, 119, 419, 519) of the hook portion (16, 116, 416, 516).

4. The manually actuatable hanger (2, 102, 202, 302, 402, 502) of claim 3, wherein the pivoting gate element (55, 155, 255, 355, 455, 555) is biased to resist opening of the gate opening (50, 150, 450, 550).

5. The manually actuatable hanger (2, 102, 202, 302, 402, 502) of claim 4, wherein the pivoting gate element (55, 155, 255, 355, 455, 555) comprises a first end received in a first aperture defined in a first side surface of the depressible tab portion (34, 134, 434, 534), the pivoting gate element comprises a second end received in a second aperture defined in a second side surface of the depressible tab portion, and the first aperture and the second aperture are axially offset from one another to cause the pivoting gate element to be biased to resist opening of the gate opening (50, 150, 450, 550).

6. The manually actuatable hanger (2, 102, 202, 302, 402, 502) of any one of the preceding claims, further comprising a second biasing element (5) configured to bias the pivoting gate element (55, 155, 255, 355, 455, 555) to resist opening of the gate opening (50, 150, 450, 550).

7. The manually actuatable hanger (2, 102, 202, 302, 402, 502) of any one of the preceding claims, wherein the first jaw portion (20, 120, 420, 520) comprises a first arcuate inner gripping surface, and the second jaw portion (40, 140, 440, 540) comprises a second arcuate inner gripping surface.

8. The manually actuatable hanger (2, 102, 202, 302, 402, 502) of claim 7, wherein the first arcuate inner gripping surface (421) comprises a first arc length, the second arcuate inner gripping surface (441) comprises a second arc length, and the second arc length is at least about twice the first arc length.

9. The manually actuatable hanger (2, 102, 202, 302, 402, 502) of any one of claims 7 or 8, further comprising a resilient material (22, 42) arranged in or along the first jaw portion (20, 120, 420, 520) and the second jaw portion (40, 140, 440, 540).

10. The manually actuatable hanger (2, 102, 202, 302, 402, 502) of any one of claims 1 to 8, wherein the first jaw portion (20, 120, 420, 520) comprises a first pliable gripping insert and the second jaw portion (40, 140, 440, 540) comprises a second pliable gripping insert.

11. The manually actuatable hanger (2, 102, 202, 302, 402, 502) of claim 10, wherein:
the first and second pliable gripping inserts each include a base portion (422, 442) and a rib portion (423, 443);
for each of the first and the second pliable gripping inserts, the rib portion extends radially inward relative to the base portion; and
for each of the first and the second pliable gripping inserts, the base portion comprises a first thickness in a direction parallel to a central axis extending through the jaw opening (428), the rib portion comprises a second thickness in the direction parallel to the central axis extending through the jaw opening, and the second thickness is smaller than the first thickness.

12. The manually actuatable hanger (2, 102, 202, 302, 402, 502) of any one of the preceding claims, wherein at least one locking mechanism is provided at or along an interface between the first body end (11, 111, 411, 511) and the first rocker end (31, 131, 431, 531) to resist initial separation between the first body end and the first rocker end.

13. The manually actuatable hanger (2, 102, 202, 302, 402, 502) of any one of the preceding claims, further comprising a travel stop (8, 108, 408, 508) arranged at the second body end (12, 112, 412, 512), wherein the travel stop comprises an inwardly protruding tab arranged to protrude through a portion of the pivoting gate element (55, 155, 255, 355, 455, 555) when the gate opening (50, 150, 450, 550) is closed by the pivoting gate element.

14. The manually actuatable hanger (2, 102, 202, 302, 402, 502) of any one of the preceding claims, further comprising one of the following items (i) or (ii): (i) a battery-powered flashlight element (280) that is affixed to or integrated with one of the main body (10, 110, 210, 310, 410, 510), the rocker element (30, 130, 203, 330, 430, 530), or the pivoting gate element (55, 155, 255, 355, 455, 555); or (ii) a battery-powered audible alarm generating element (390) that is affixed to or integrated with one of the main body, the rocker element, or the pivoting gate element.

15. A method for suspending one or more articles from a cylindrical or tubular carrier structure using the manually actuatable hanger (2, 102, 202, 302, 402, 502) of any one of claims 1 to 14, the method comprising:
pressing the depressible tab portion (34, 134, 434, 534) toward the hook portion (16, 116, 416, 516) to cause the second jaw portion (40, 140, 440, 540) to pivot away from the first jaw portion (20, 120, 420, 520) and expand the jaw opening;
inserting the cylindrical or tubular carrier structure into the jaw opening;
releasing pressure applied to the depressible tab portion to cause the first jaw portion and the second jaw portion to grip the cylindrical or tubular carrier structure;
operating the pivoting gate element (55, 155, 255, 355, 455, 555) to open the gate opening (50, 150, 450, 550); and
inserting the one or more articles through the gate opening to be hung from the interior surface (19, 119, 419, 519) of the hook portion.

## Patentansprüche

1. Manuell betätigbarer Aufhänger (2, 102, 202, 302, 402, 502), umfassend:
einen Hauptkörper (10, 110, 210, 310, 410, 510), der ein erstes Körperende (11, 111, 411, 511), ein zweites Körperende (12, 112, 412, 512), einen ersten Backenbereich (20, 120, 420, 520) nahe dem ersten Körperende, einen Hakenbereich (16, 116, 416, 516) nahe dem zweiten Körperende und einen ersten Schwenkbereich (15, 115, 415, 515) zwischen dem ersten Backenbereich und dem Hakenbereich umfasst;
ein Schwingelement (30, 130, 203, 330, 430, 530), das ein erstes Schwingende (31, 131, 431, 531), ein zweites Schwingende (32, 132, 432, 532) und einen zweiten Backenbereich (40, 140, 440, 540) in der Nähe des ersten Schwingendes umfasst, einen manuell niederdrückbaren Laschenbereich (34, 134, 434, 534) nahe dem zweiten Schwingende und einen zweiten Schwenkbereich (35, 135, 435, 535), der zwischen dem zweiten Backenbereich und dem niederdrückbaren Laschenbereich angeordnet ist;
ein erstes Vorspannelement (3, 103, 403, 503), das konfiguriert ist, um eine Rotationskraft zwischen dem Hauptkörper und dem Schwingelement auszuüben, und das konfiguriert ist, um einer Ausdehnung einer Backenöffnung zwischen dem ersten Backenbereich und dem zweiten Backenbereich zu widerstehen; und
ein schwenkbares Durchgangselement (55, 155, 255, 355, 455, 555), das sich zwischen dem niederdrückbaren Laschenbereich und dem zweiten Körperende erstreckt;
wobei:
der zweite Schwenkbereich mit dem ersten Schwenkbereich eingerastet ist und das Schwingelement relativ zum Hauptkörper schwenken lässt;
der zweite Backenbereich konfiguriert ist, um von dem ersten Backenbereich weggeschwenkt zu werden, um die Backenöffnung zu erweitern, wenn der niederdrückbare Laschenbereich von einem Benutzer in Richtung des Hakenbereichs gedrückt wird;
eine Durchgangsöffnung (50, 150, 450, 550) zwischen dem niederdrückbaren Laschenbereich und dem zweiten Körperende vorgesehen ist; und
das schwenkbare Durchgangselement vom Benutzer betätigbar ist, um die Durchgangsöffnung selektiv zu öffnen, um einen Zugang zum Hakenbereich zu schaffen, wobei einer oder mehrere Gegenstände an einer Innenfläche (19, 119, 419, 519) des Hakenbereichs aufgehängt werden können.

2. Manuell betätigbarer Aufhänger (2, 102, 202, 302, 402, 502) nach Anspruch 1, weiter umfassend einen Drehzapfen (29), einen Drehstab oder einen Drehzylinder, der sich durch den ersten Schwenkbereich (15, 115, 415, 515) und den zweiten Schwenkbereich (35, 135, 435, 535) erstreckt.

3. Manuell betätigbarer Aufhänger (2, 102, 202, 302, 402, 502) nach einem der Ansprüche 1 oder 2, wobei das schwenkbare Durchgangselement (55, 155, 255, 355, 455, 555) schwenkbar mit dem Schwingelement (30, 130, 203, 330, 430, 530) in der Nähe des zweiten Schwingendes (32, 132, 432, 532) verbunden ist und nach innen zur Innenfläche (19, 119, 419, 519) des Hakenbereichs (16, 116, 416, 516) hin schwenkbar angeordnet ist.

4. Manuell betätigbarer Aufhänger (2, 102, 202, 302, 402, 502) nach Anspruch 3, wobei das schwenkbare Durchgangselement (55, 155, 255, 355, 455, 555) vorgespannt ist, um dem Öffnen der Durchgangsöffnung (50, 150, 450, 550) zu widerstehen.

5. Manuell betätigbarer Aufhänger (2, 102, 202, 302, 402, 502) nach Anspruch 4, wobei das schwenkbare Durchgangselement (55, 155, 255, 355, 455, 555) ein erstes Ende umfasst, das in einer ersten Öffnung aufgenommen ist, die in einer ersten Seitenfläche des niederdrückbaren Laschenbereichs (34, 134, 434, 534) definiert ist, das schwenkbare Durchgangselement ein zweites Ende umfasst, das in einer zweiten Öffnung aufgenommen ist, die in einer zweiten Seitenfläche des niederdrückbaren Laschenbereichs definiert ist, und die erste Öffnung und die zweite Öffnung axial voneinander versetzt sind, um zu bewirken, dass das schwenkbare Durchgangsöffnung vorgespannt wird, um dem Öffnen der Durchgangsöffnung (50, 150, 450, 550) zu widerstehen.

6. Manuell betätigbarer Aufhänger (2, 102, 202, 302, 402, 502) nach einem der vorstehenden Ansprüche, weiter umfassend ein zweites Vorspannelement (5), das konfiguriert ist, um das schwenkbare Durchgangselement (55, 155, 255, 355, 455, 555) vorzuspannen, um dem Öffnen der Durchgangsöffnung (50, 150, 450, 550) zu widerstehen.

7. Manuell betätigbarer Aufhänger (2, 102, 202, 302, 402, 502) nach einem der vorstehenden Ansprüche, wobei der erste Backenbereich (20, 120, 420, 520) eine erste bogenförmige innere Greiffläche und der zweite Backenbereich (40, 140, 440, 540) eine zweite bogenförmige innere Greiffläche umfasst.

8. Manuell betätigbarer Aufhänger (2, 102, 202, 302, 402, 502) nach Anspruch 7, wobei die erste bogenförmige innere Greiffläche (421) eine erste Bogenlänge umfasst, die zweite bogenförmige innere Greiffläche (441) eine zweite Bogenlänge umfasst und die zweite Bogenlänge mindestens etwa das Doppelte der ersten Bogenlänge beträgt.

9. Manuell betätigbarer Aufhänger (2, 102, 202, 302, 402, 502) nach einem der Ansprüche 7 oder 8, weiter umfassend ein elastisches Material (22, 42), das in oder entlang des ersten Backenbereichs (20, 120, 420, 520) und des zweiten Backenbereichs (40, 140, 440, 540) angeordnet ist.

10. Manuell betätigbarer Aufhänger (2, 102, 202, 302, 402, 502) nach einem der Ansprüche 1 bis 8, wobei der erste Backenbereich (20, 120, 420, 520) einen ersten biegsamen Greifeinsatz und der zweite Backenbereich (40, 140, 440, 540) einen zweiten nachgiebigen Greifeinsatz umfasst.

11. Manuell betätigbarer Aufhänger (2, 102, 202, 302, 402, 502) nach Anspruch 10,
wobei:
die ersten und zweiten nachgiebigen Greifeinsätze jeweils einen Basisbereich (422, 442) und einen Rippenbereich (423, 443) beinhalten;
sich der Rippenbereich für jeden der ersten und zweiten nachgiebigen Greifeinsätze radial nach innen in Bezug auf den Basisbereich erstreckt; und
für jeden der ersten und zweiten nachgiebigen Greifeinsätze der Basisbereich eine erste Dicke in einer Richtung parallel zu einer Mittelachse umfasst, die sich durch die Backenöffnung (428) erstreckt, der Rippenbereich eine zweite Dicke in der Richtung parallel zu der Mittelachse umfasst, die sich durch die Backenöffnung erstreckt, und die zweite Dicke kleiner als die erste Dicke ist.

12. Manuell betätigbarer Aufhänger (2, 102, 202, 302, 402, 502) nach einem der vorstehenden Ansprüche, wobei mindestens ein Verriegelungsmechanismus an oder entlang einer SchnittSchnappere zwischen dem ersten Körperende (11, 111, 411, 511) und dem ersten Schwingende (31, 131, 431, 531) bereitgestellt ist, um einer anfänglichen Trennung zwischen dem ersten Körperende und dem ersten Schwingende zu widerstehen.

13. Manuell betätigbarer Aufhänger (2, 102, 202, 302, 402, 502) nach einem der vorstehenden Ansprüche, weiter umfassend einen am zweiten Körperende (12, 112, 412, 512) angeordneten Bewegungsanschlag (8, 108, 408, 508), wobei der Bewegungsanschlag eine nach innen vorstehende Lasche umfasst, die so angeordnet ist, dass sie durch einen Bereich des schwenkbaren Durchgangselements (55, 155, 255, 355, 455, 555) hindurch vorsteht, wenn die Durchgangsöffnung (50, 150, 450, 550) durch das schwenkbare Durchgangselement geschlossen wird.

14. Manuell betätigbarer Aufhänger (2, 102, 202, 302, 302, 402, 502) nach einem der vorstehenden Ansprüche, weiter umfassend eines der folgenden Teile (i) oder (ii): (i) ein batteriebetriebenes Taschenlampenelement (280), das an einem der Hauptkörper (10, 110, 210, 310, 410, 510), dem Schwingelement (30, 130, 203, 330, 430, 530) oder dem schwenkbaren Durchgangselement (55, 155, 255, 355, 455, 555) befestigt oder mit diesem integriert ist; oder (ii) ein batteriebetriebenes akustisches Alarmerzeugungselement (390), das an einem der Hauptkörper, dem Schwingelement oder dem schwenkbaren Durchgangselement befestigt oder mit diesem integriert ist.

15. Verfahren zum Abhängen eines oder mehrerer Gegenstände an einer zylindrischen oder rohrförmigen Trägerstruktur unter Verwendung des manuell betätigbaren Aufhängers (2, 102, 202, 302, 402, 502) nach einem der Ansprüche 1 bis 14, wobei das Verfahren umfasst:
Drücken des niederdrückbaren Laschenbereichs (34, 134, 434, 534) in Richtung des Hakenbereichs (16, 116, 416, 516), um zu bewirken, dass der zweite Backenbereich (40, 140, 440, 540) vom ersten Backenbereich (20, 120, 420, 520) weg schwenkt und die Backenöffnung erweitert;
Einsetzen der zylindrischen oder rohrförmigen Trägerstruktur in die Backenöffnung;
Lösen des Drucks, der auf den niederdrückbaren Laschenbereich ausgeübt wird, um zu bewirken, dass der erste Backenbereich und der zweite Backenbereich die zylindrische oder rohrförmige Trägerstruktur greifen;
Betätigen des schwenkbaren Stellelements (55, 155, 255, 355, 455, 555) zum Öffnen der Durchgangsöffnung (50, 150, 450, 550); und
Einsetzen des einen oder der mehreren Gegenstände durch die Durchgangsöffnung, die an der Innenfläche (19, 119, 419, 519) des Hakenbereichs aufgehängt werden sollen.

## Revendications

1. Dispositif de suspension à actionnement manuel (2, 102, 202, 302, 402, 502) comprenant :
un corps principal (10, 110, 210, 310, 410, 510) comprenant une première extrémité de corps (11, 111, 411, 511), une seconde extrémité de corps (12, 112, 412, 512), une première partie de mâchoire (20, 120, 420, 520) à proximité de la première extrémité de corps, une partie de crochet (16, 116, 416, 516) à proximité de la seconde extrémité de corps, et une première région de pivot (15, 115, 415, 515) entre la première partie de mâchoire et la partie de crochet ;
un élément de bras oscillant (30, 130, 203, 330, 430, 530) comprenant une première extrémité de bras oscillant (31, 131, 431, 531), une seconde extrémité de bras oscillant (32, 132, 432, 532), une seconde partie de mâchoire (40, 140, 440, 540) à proximité de la première extrémité de bras oscillant, une partie de patte pouvant être enfoncée manuellement (34, 134, 434, 534) à proximité de la seconde extrémité de bras oscillant, et une seconde région de pivot (35, 135, 435, 535) agencée entre la seconde partie de mâchoire et la partie de patte pouvant être enfoncée ;
un premier élément de sollicitation (3, 103, 403, 503) configuré pour exercer une force de rotation entre le corps principal et l'élément de bras oscillant, et configuré pour résister à une expansion d'une ouverture de mâchoire entre la première partie de mâchoire et la seconde partie de mâchoire ; et
un élément de porte pivotante (55, 155, 255, 355, 455, 555) s'étendant entre la partie de patte pouvant être enfoncée et la seconde extrémité de corps ;
dans lequel :
la seconde région de pivot est calée avec la première région de pivot et permet à l'élément de bras oscillant de pivoter par rapport au corps principal ;
la seconde partie de mâchoire est configurée pour être pivotée à l'opposé de la première partie de mâchoire pour élargir l'ouverture de mâchoire lorsque la partie de patte pouvant être enfoncée est pressée par un utilisateur vers la partie de crochet ;
une ouverture de porte (50, 150, 450, 550) est prévue entre la partie de patte pouvant être enfoncée et la seconde extrémité de corps ; et
l'élément de porte pivotante peut être actionné par l'utilisateur pour ouvrir sélectivement l'ouverture de porte afin de fournir un accès à la partie de crochet, de telle sorte qu'un ou plusieurs articles peuvent être suspendus à une surface intérieure (19, 119, 419, 519) de la partie de crochet.

2. Dispositif de suspension à actionnement manuel (2, 102, 202, 302, 402, 502) selon la revendication 1, comprenant en outre un axe de pivot (29), une tige de pivot, ou un cylindre de pivot s'étendant à travers la première région de pivot (15, 115, 415, 515) et la seconde région de pivot (35, 135, 435, 535).

3. Dispositif de suspension à actionnement manuel (2, 102, 202, 302, 402, 502) selon l'une quelconque des revendications 1 ou 2, dans lequel l'élément de porte pivotante (55, 155, 255, 355, 455, 555) est lié de manière pivotante à l'élément de bras oscillant (30, 130, 203, 330, 430, 530) à proximité de la seconde extrémité de bras oscillant (32, 132, 432, 532), et est agencé pour pivoter vers l'intérieur vers la surface intérieure (19, 119, 419, 519) de la partie de crochet (16, 116, 416, 516).

4. Dispositif de suspension à actionnement manuel (2, 102, 202, 302, 402, 502) selon la revendication 3, dans lequel l'élément de porte pivotante (55, 155, 255, 355, 455, 555) est sollicité pour résister à une ouverture de l'ouverture de porte (50, 150, 450, 550).

5. Dispositif de suspension à actionnement manuel (2, 102, 202, 302, 402, 502) selon la revendication 4, dans lequel l'élément de porte pivotante (55, 155, 255, 355, 455, 555) comprend une première extrémité reçue dans une première ouverture définie dans une première surface latérale de la partie de patte pouvant être enfoncée (34, 134, 434, 534), l'élément de porte pivotante comprend une seconde extrémité reçue dans une seconde ouverture définie dans une seconde surface latérale de la partie de patte pouvant être enfoncée, et la première ouverture et la seconde ouverture sont décalées axialement l'une par rapport à l'autre pour amener l'élément de porte pivotante à être sollicité pour résister à une ouverture de l'ouverture de porte (50, 150, 450, 550).

6. Dispositif de suspension à actionnement manuel (2, 102, 202, 302, 402, 502) selon l'une quelconque des revendications précédentes, comprenant en outre un second élément de sollicitation (5) configuré pour solliciter l'élément de porte pivotante (55, 155, 255, 355, 455, 555) pour résister à une ouverture de l'ouverture du portail (50, 150, 450, 550).

7. Dispositif de suspension à actionnement manuel (2, 102, 202, 302, 402, 502) selon l'une quelconque des revendications précédentes, dans lequel la première partie de mâchoire (20, 120, 420, 520) comprend une première surface de préhension intérieure arquée, et la seconde partie de mâchoire (40, 140, 440, 540) comprend une seconde surface de préhension intérieure arquée.

8. Dispositif de suspension à actionnement manuel (2, 102, 202, 302, 402, 502) selon la revendication 7, dans lequel la première surface de préhension intérieure arquée (421) comprend une première longueur d'arc, la seconde surface de préhension intérieure arquée (441) comprend une seconde longueur d'arc, et la seconde longueur d'arc est au moins environ le double de la première longueur d'arc.

9. Dispositif de suspension à actionnement manuel (2, 102, 202, 302, 402, 502) selon l'une quelconque des revendications 7 ou 8, comprenant en outre un matériau élastique (22, 42) agencé dans ou le long de la première partie de mâchoire (20, 120, 420, 520) et de la seconde partie de mâchoire (40, 140, 440, 540).

10. Dispositif de suspension à actionnement manuel (2, 102, 202, 302, 402, 502) selon l'une quelconque des revendications 1 à 8, dans lequel la première partie de mâchoire (20, 120, 420, 520) comprend un premier insert de préhension pliable et la seconde partie de mâchoire (40, 140, 440, 540) comprend un second insert de préhension pliable.

11. Dispositif de suspension à actionnement manuel (2, 102, 202, 302, 402, 502) selon la revendication 10, dans lequel :
les premier et second inserts de préhension pliables incluent chacun une partie de base (422, 442) et une partie de nervure (423, 443) ;
pour chacun des premier et second inserts de préhension pliables, la partie de nervure s'étend radialement vers l'intérieur par rapport à la partie de base ; et
pour chacun des premier et second inserts de préhension pliables, la partie de base comprend une première épaisseur dans une direction parallèle à un axe central s'étendant à travers l'ouverture de mâchoire (428), la partie de nervure comprend une seconde épaisseur dans la direction parallèle à l'axe central s'étendant à travers l'ouverture de mâchoire, et la seconde épaisseur est plus petite que la première épaisseur.

12. Dispositif de suspension à actionnement manuel (2, 102, 202, 302, 402, 502) selon l'une quelconque des revendications précédentes, dans lequel au moins un mécanisme de verrouillage est prévu au niveau ou le long d'une interface entre la première extrémité de corps (11, 111, 411, 511) et la première extrémité de bras oscillant (31, 131, 431, 531) pour résister à une séparation initiale entre la première extrémité de corps et la première extrémité de bras oscillant.

13. Dispositif de suspension à actionnement manuel (2, 102, 202, 302, 402, 502) selon l'une quelconque des revendications précédentes, comprenant en outre une butée de course (8, 108, 408, 508) agencée au niveau de la seconde extrémité de corps (12, 112, 412, 512), dans lequel la butée de course comprend une patte faisant saillie vers l'intérieur agencée pour faire saillie à travers une partie de l'élément de porte pivotante (55, 155, 255, 355, 455, 555) lorsque l'ouverture de porte (50, 150, 450, 550) est fermé par l'élément de porte pivotante.

14. Dispositif de suspension à actionnement manuel (2, 102, 202, 302, 402, 502) selon l'une quelconque des revendications précédentes, comprenant en outre l'un des éléments (i) ou (ii) suivants : (i) un élément de lampe de poche alimentée par batterie (280) qui est fixé ou intégré à l'un du corps principal (10, 110, 210, 310, 410, 510), de l'élément de bras oscillant (30, 130, 203, 330, 430, 530) ou de élément de porte pivotante (55, 155, 255, 355, 455, 555) ; ou (ii) un élément générateur d'alarme sonore alimenté par batterie (390) qui est fixé ou intégré à l'un du corps principal, de l'élément de bras oscillant ou de l'élément de porte pivotante.

15. Procédé pour suspendre un ou plusieurs articles à partir d'une structure porteuse cylindrique ou tubulaire en utilisant le dispositif de suspension à actionnement manuel (2, 102, 202, 302, 402, 502) selon l'une quelconque des revendications 1 à 14, le procédé comprenant les étapes consistant à :
presser la partie de patte pouvant être enfoncée (34, 134, 434, 534) vers la partie de crochet (16, 116, 416, 516) pour faire pivoter la seconde portion de mâchoire (40, 140, 440, 540) à l'opposé de la première partie de mâchoire (20, 120, 420, 520) et élargir l'ouverture de mâchoire ;
insérer la structure porteuse cylindrique ou tubulaire dans l'ouverture de mâchoire ;
relâcher la pression appliquée à la partie de patte pouvant être enfoncée pour amener la première partie de mâchoire et la seconde partie de mâchoire à saisir la structure porteuse cylindrique ou tubulaire ;
actionner l'élément de porte pivotante (55, 155, 255, 355, 455, 555) pour ouvrir l'ouverture de porte (50, 150, 450, 550); et
insérer les un ou plusieurs articles à travers l'ouverture de porte afin qu'ils soient suspendus à partir de la surface intérieure (19, 119, 419, 519) de la partie de crochet.
